# EUROPEAN PATENT SPECIFICATION

(11) **EP 3 076 493 B1**
(45) Date of publication and mention of the grant of the patent: **09.05.2018**
(21) Application number: 16161586.9
(22) Date of filing: 22.03.2016
(51) Int. Cl.: H01R 13/53, H01R 13/66, H01R 13/703, H01R 13/717, H01R 105/00, H01R 103/00, G05B 15/02

(54) **SPARKLESS SOCKET**
FUNKENLOSE STECKDOSE
DOUILLE SANS ÉTINCELLES

(30) Priority: 01.04.2015 TW 104110702; 13.10.2015 TW 104133442
(43) Date of publication of application: 05.10.2016
(73) Proprietor: Hsu, Cheng-Tsuen, Taipei City 11671 (TW)
(72) Inventor: Hsu, Cheng-Tsuen, Taipei City 11671 (TW)
(74) Representative: 2K Patentanwälte Blasberg Kewitz & Reichel

(56) References cited:
- WO-A1-00/41275
- FR-A1- 2 653 944
- US-A1- 2013 127 261
- US-A1- 2014 199 863

## Description

### BACKGROUND OF THE INVENTION

### FIELD OF THE INVENTION

The invention relates to a socket, and specifcally relates to a sparkless socket.

### DESCRIPTION OF RELATED ART

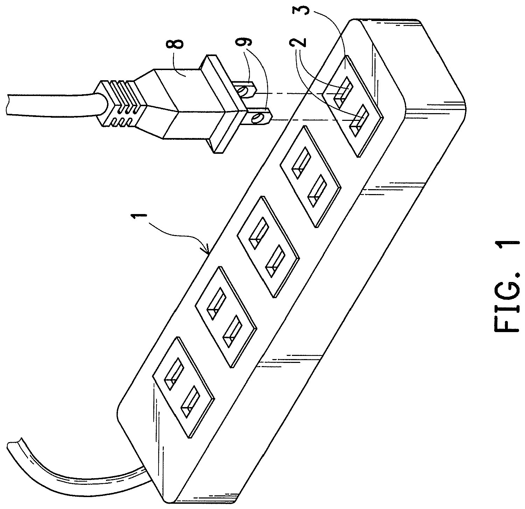

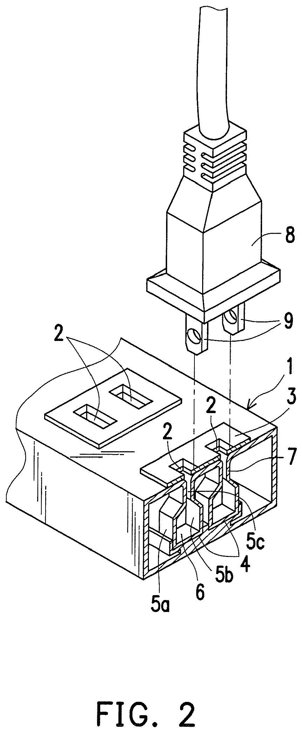

A conventional socket structure is shown in Fig. 1 and Fig. 2. This socket structure includes a housing 1. Two parallel slots 2 and at least one base unit 3 are configured on the housing 1. Two limiting slots 4 are configured on the base unit 3. A first clip 5a and a second clip 5b made of conductive material and opposite to each other are configured on each of the limiting slots 4. The middle part of each of the first clip 5a and the second clip 5b is bent inward so that the distance between the first clip 5a and the second clip 5b decreases to form a clamped portion 5c. The ends of the first clip 5a and the second clip 5b away from the slot 2 are connected with each other to form an electrical terminal 6. The electrical terminal 6 is configured to connect to city power. Both of the ends of the first clip 5a and the second clip 5b, which are closer to the slot 2, form an open insertion port 7. In addition, the insertion port 7 corresponds to the slot 2.

Accordingly, the user may insert the plug 8 into the socket structure. As a result, electricity is provided to an appliance connected to the plug 8. When two parallel and plate-like pins 9 of the plug 8 are inserted into the two slots 2 of the insertion port 7 and the plug 8 is resisted by a front wall of the base unit 3, each of the pins 9 is clamped by the clamped portion 5c of the first clip 5a and the second clip 5b so that the electricity of the city power is conducted from the first clip 5a and the second clip 5b to the two pins 9 of the plug 8, so as to form a conducting state.

However, when the user inserts the two pins 9 of the plug 8 into the slots 2 or pulls the two pins 9 of the plug 8 from the insertion slot 7, sparks are easily generated at the moment when the two pins 9 of the plug 8 are being in contact with or being pulled out from the first clip 5a and the second clip 5b, and therefore, the generated sparks not only cause danger but also scare the user.

US 2013/127261 A1 discloses a DC connection device including a first connector connected to a DC power source side or a load side; and a second connector connected to the first connector. The first connector or the second connector has a semiconductor switch that is turned on when a portion of at least one of terminals of one of the first and second connectors is brought into contact with a terminal of the other of the first and second connectors, and is turned off before the terminal of the one of the first and second connectors is completely separated from the terminal of the other of the first and second connectors.

US 2014/199863 A1 discloses a power supply connection structure device, a manufacturing method thereof and a circuit connection method. The device, which is used to connect an electrical appliance to a power supply, includes a live wire and neutral wire connection unit and a control unit, the control unit is switched between an activation state and an idle state, when the control unit is in the idle state, the live wire and neutral wire connection unit is not connected to the power supply; and when the control unit is in the activation state, the control unit connects the live wire and neutral wire connection unit to the power supply, thus, by using the control unit, the power supply connection structure device is safe to use, is waterproof and prevents individual from electric shock.

FR 2 653 944 A1 discloses an electrical power connection comprising a plug (male) connector and a socket (female) connector (see plug A and socket B in Fig. 1). The socket is designed to be a sparkless socket which is configured to be in contact with a pair of pins of the plug which can be inserted in the socket. A first slot and a second slot are configured in the socket (see elements 15 in Fig. 2). The socket comprises a sensing module (see element 4 in Fig. 1), comprising an emitter (element 8), configured to emit infrared light; and a first receiver (part of element 9), configured to receive the infrared light via a light guide element module (element 11), so as to generate a first sensing result accordingly. The socket further comprises a controller (element 9), coupled to the sensing module so as to receive the first sensing result, and connected to a city power system (reference sign S). The socket further comprises a switching module (element 7), coupled between the socket and the controller to receive an alternating-current, AC, power provided by the city power system (S) and controlled by the controller (9) to transmit the AC power to the socket. When the controller (9) determines that the first receiver (part of 9) does not receive the infrared light according to the first sensing result, the controller (9) enables the switching module (7), and otherwise, the controller (9) disables the switching module (600).

WO 00/41275 A1 discloses an electrical receptacle (plug) which is safe for children yet easy for adults to use. This electrical receptacle provides power only to a properly inserted plug and makes use of one or more sensors which are able to detect blade insertion, ground plug insertion, presence of the plug face motion near the receptacle face or a combination thereof. The receptacle includes a contact assembly adapted and configured to conductively couple each blade of the plug to a conductor, one or more sensors, and a control circuit; wherein the control circuit determines whether or not to provide power to the properly inserted plug by determining if substantially simultaneous insertion has occurred.

### SUMMARY OF THE INVENTION

The invention provides a sparkless socket which can prevent sparks from being generated and causing danger at the moment when pins of a plug are being in contact with or being pulled out from conductive clips in a socket, so as to reduce user's fear and to enhance the electricity safety.

The sparkless /non-sparking socket of the invention is configured to insert a pair of pins of a plug. The sparkless socket includes a socket, a sensing module, a controller, and a switching module. A first slot and a second slot are configured in the socket. A through hole is configured on a slot wall of each of the first slot and the second slot, and the through holes face each other. The sensing module includes an emitter and a first receiver. The emitter is configured to emit infrared light. The first receiver is configured to receive the infrared light via a light guide element module and at least one of the through holes so as to generate a first sensing result accordingly. The controller is coupled to the sensing module so as to receive the first sensing result, and connected to a city power system. The switching module is coupled between the socket and the controller to receive an alternating-current (AC) power provided by the city power system from the controller, and controlled by the controller to transmit the AC power to the socket. When the controller determines that the first receiver does not receive the infrared light according to the first sensing result, the controller enables the switching module, and otherwise, the controller disables the switching module.

In one embodiment of the invention, the socket further includes a front wall, wherein the front wall has an aperture. The aperture is located between the first slot and the second slot. The sparkless socket further includes a pressing stick and a mechanical switch. The pressing stick is disposed in an inner space of the socket. An end of the pressing stick protrudes from the socket via the aperture of the front wall so as to form a protrusion part. The mechanical switch has a control terminal, and the control terminal of the mechanical switch faces another end of the pressing stick. The mechanical switch is controlled by the pressing stick so as to generate a first signal. The controller is further coupled to the mechanical switch so as to receive the first signal. When the controller determines that the first receiver does not receive the infrared light according to the first sensing result and determines that the another end of the pressing stick presses the control terminal of the mechanical switch according to the first signal, the controller enables the switching module, and otherwise, the controller disables the switching module.

In one embodiment of the invention, the another end of the pressing stick is not in contact with the control terminal of the mechanical switch when the plug does not touch the protrusion part. The plug presses the protrusion part to cause the another end of the pressing stick to press the control terminal of the mechanical switch after the pair of pins of the plug are completely inserted into the first slot and the second slot of the socket.

In one embodiment of the invention, the sensing module further includes a second receiver. The second receiver is configured to receive the infrared light via the light guide element module and one of the through holes, so as to generate a second sensing result accordingly. The first receiver is configured to receive the infrared light via the light guide element module and another one of the through holes, so as to generate the first sensing result accordingly. When the controller determines that none of the first receiver and the second receiver receives the infrared light according to the first sensing result and the second sensing result, the controller enables the switching module; otherwise, the controller disables the switching module.

In one embodiment of the invention, the socket further includes a front wall, wherein the front wall has an aperture. The aperture is located between the first slot and the second slot. The sparkless socket further includes a pressing stick and a mechanical switch. The pressing stick is disposed in an inner space of the socket. An end of the pressing stick protrudes from the socket via the aperture of the front wall so as to form a protrusion part. The mechanical switch has a control terminal, and the control terminal of the mechanical switch faces another end of the pressing stick. The mechanical switch is controlled by the pressing stick so as to generate a first signal. The controller is further coupled to the mechanical switch so as to receive the first signal. When the controller determines that none of the first receiver and the second receiver receives the infrared light according to the first sensing result and the second sensing result, and determines that the another end of the pressing stick presses the control terminal of the mechanical switch according to the first signal, the controller enables the switching module, and otherwise, the controller disables the switching module. In one embodiment of the invention, the emitter is disposed between the first receiver and the second receiver. The light guide element module includes a first light guide pillar, a second light guide pillar, and a third light guide pillar. The first light guide pillar is disposed among the first slot, the second slot, and the emitter, and configured to guide the infrared light emitted by the emitter. An entrance of the first light guide pillar faces the emitter to receive the infrared light emitted by the emitter. An exit of the first light guide pillar faces the through hole of the first slot, and another exit of the first light guide pillar faces the through hole of the second slot. The second light guide pillar is disposed between the first slot and the first receiver. An entrance of the second light guide pillar faces the through hole of the first slot, and an exit of the second light guide pillar faces the first receiver. The third light guide pillar is disposed between the second slot and the second receiver. An entrance of the third light guide pillar faces the through hole of the second slot, and an exit of the third light guide pillar faces the second receiver.

In one embodiment of the invention, when the pair of pins of the plug is not inserted or not completely inserted into the first slot and the second slot of the socket, the infrared light emitted by the emitter is transmitted to the first receiver via the first light guide pillar, the through hole of the first slot, and the second light guide pillar sequentially, and the infrared light emitted by the emitter is transmitted to the second receiver via the first light guide pillar, the through hole of the second slot, and the third light guide pillar sequentially. On the other hand, after the pair of pins of the plug is completely inserted into the first slot and the second slot of the socket, the pair of pins of the plug covers the through hole of the first slot and the through hole of the second slot to block the infrared light guided by the first light guide pillar.

In one embodiment of the invention, the light guide element module includes a first light guide pillar and a second light guide pillar. The first light guide pillar is disposed between the first slot and the emitter, and configured to guide the infrared light emitted by the emitter. An entrance of the first light guide pillar faces the emitter to receive the infrared light emitted by the emitter, and an exit of the first light guide pillar faces the through hole of the first slot. The second light guide pillar is disposed between the second slot and the first receiver. An entrance of the second light guide pillar faces the through hole of the second slot, and an exit of the second light guide pillar faces the first receiver. Wherein, the first slot and the second slot are disposed between the first light guide pillar and the second light guide pillar.

In one embodiment of the invention, when the pair of pins of the plug is not inserted or not completely inserted into the first slot and the second slot, the infrared light emitted by the emitter is transmitted to the first receiver via the first light guide pillar, the through hole of the first slot, the through hole of the second slot, and the second light guide pillar sequentially. On the other hand, after the pair of pins of the plug is completely inserted into the first slot and the second slot of the socket, the pair of pins of the plug covers the through hole of the first slot and the through hole of the second slot to block the infrared light guided by the first light guide pillar.

A sparkless socket of the invention is configured to insert three pins of a plug. The sparkless socket includes a socket, a sensing module, a controller, and a switching module. The socket includes a first slot, a second slot, and a third slot at a different direction from the first slot and the second slot. A through hole is configured on a slot wall of each of the first slot, the second slot, and the third slot. The sensing module includes an emitter, a first receiver, a second receiver, and a third receiver. The emitter is configured to emit infrared light. The first receiver is configured to receive the infrared light via a light guide element module and the through hole of the first slot, so as to generate a first sensing result accordingly. The second receiver is configured to receive the infrared light via the light guide element module and the through hole of the second slot, so as to generate a second sensing result accordingly. The third receiver is configured to receive the infrared light via the light guide element module and the through hole of the third slot, so as to generate a third sensing result accordingly. The controller is coupled to the sensing module to receive the first sensing result, the second sensing result, and the third sensing result, and connected to a city power system. The switching module is coupled between the socket and the controller to receive an alternating-current (AC) power provided by the city power system from the controller, and controlled by the controller to transmit the AC power to the socket. When the controller determines that none of the first receiver, the second receiver, and the third receiver receives the infrared light according to the first sensing result, the second sensing result, and the third sensing result, the controller enables the switching module, and otherwise, the controller disables the switching module.

In one embodiment of the invention, the socket further includes a front wall, wherein the front wall has an aperture. The aperture is located between the first slot and the second slot. The sparkless socket further includes a pressing stick and a mechanical switch. The pressing stick is disposed in an inner space of the socket. An end of the pressing stick protrudes from the socket via the aperture of the front wall so as to form a protrusion part. The mechanical switch has a control terminal, and the control terminal of the mechanical switch faces another end of the pressing stick. The mechanical switch is controlled by the pressing stick so as to generate a first signal. The controller is further coupled to the mechanical switch so as to receive the first signal. When the controller determines that none of the first receiver, the second receiver, and the third receiver receives the infrared light according to the first sensing result, the second sensing result, and the third sensing result, and determines that the another end of the pressing stick presses the control terminal of the mechanical switch according to the first signal, the controller enables the switching module, and otherwise, the controller disables the switching module.

In one embodiment of the invention, the light guide element module includes a first light guide pillar, a second light guide pillar, a third light guide pillar, and a fourth light guide pillar. The first light guide pillar is disposed among the first slot, the second slot, the third slot, and the emitter, and configured to guide the infrared light emitted by the emitter. Wherein, an entrance of the first light guide pillar faces the emitter to receive the infrared light emitted by the emitter, and three exits of the first light guide pillar faces the through hole of the first slot, the through hole of the second slot, and the through hole of the third slot respectively. The second light guide pillar is disposed between the first slot and the first receiver. An entrance of the second light guide pillar faces the through hole of the first slot, and an exit of the second light guide pillar faces the first receiver. The third light guide pillar is disposed between the second slot and the second receiver. An entrance of the third light guide pillar faces the through hole of the second slot, and an exit of the third light guide pillar faces the second receiver. The fourth light guide pillar is disposed between the third slot and the third receiver. An entrance of the fourth light guide pillar faces the through hole of the third slot, and an exit of the fourth light guide pillar faces the third receiver.

In one embodiment of the invention, the first light guide pillar includes a first pin, a second pin, a third pin, and a fourth pin connected with each other, wherein the first pin, the second pin, the third pin, and the fourth pin form a three-dimensional double T-shaped structure. Wherein, the first pin, the second pin, and the third pin are connected with each other to form a T-shaped structure. The first pin, the second pin, and the fourth pin are connected with each other to form a T-shaped structure. In addition, the third pin and the fourth pin are connected with each other to form an inverted-L structure. Wherein, the entrance of the first light guide pillar is disposed at the fourth pin, and the three exits of the first light guide pillar are respectively disposed at the first pin, the second pin, and the third pin.

In one embodiment of the invention, when the three pins of the plug are not inserted or not completely inserted into the first slot, the second slot, and the third slot of the socket, the infrared light emitted by the emitter is transmitted to the first receiver via the first light guide pillar, the through hole of the first slot, and the second light guide pillar sequentially; the infrared light emitted by the emitter is transmitted to the second receiver via the first light guide pillar, the through hole of the second slot, and the third light guide pillar sequentially; the infrared light emitted by the emitter is transmitted to the third receiver via the first light guide pillar, the through hole of the third slot, and the fourth light guide pillar sequentially. On the other hand, after the three pins of the plug are completely inserted into the first slot, the second slot, and the third slot of the socket, the three pins of the plug cover the through hole of the first slot, the through hole of the second slot, and the through hole of the third slot to block the infrared light guided by the first light guide pillar.

Based on the above, the sparkless socket of the invention, before a plug of an appliance being completely inserted into the socket, allows the controller to disable the switching module because the infrared light emitted by the emitter may pass through the through holes and reach the receiver or another end of the pressing stick is not in contact with the mechanical switch. In contrast, after the plug of the appliance is completely inserted into the socket, the through holes are covered by the plug so that the infrared light emitted by the emitter is blocked and unable to be transmitted to the receiver and the protrusion part is controlled by the plug to make another end of the pressing stick press the mechanical switch. At this time, the controller is able to switch the switching module to be enabled, so as to provide AC power to the socket. As a result, sparks are prevented from being generated at the moment when the pins of the plug are being in contact with or being pulled out from the socket, so as to enhance the electricity safety.

In order to make the aforementioned and other features and advantages of the invention more comprehensible, embodiments accompanying figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

First and second embodiments are considered as examples and as such, do not form part of the invention.
Fig. 1 is a schematic three-dimensional view of a conventional socket structure.
Fig. 2 is a schematic cross-sectional view of a conventional socket structure.
Fig. 3 is a schematic cross-sectional view depicting a sparkless socket combined with a plug according to the first embodiment of the invention.
Fig. 4 is a schematic three-dimensional view depicting a first slot of the sparkless socket according to the first embodiment of the invention.
Fig. 5 is a schematic circuit diagram depicting the sparkless socket according to the first embodiment of the invention.
Fig. 6 is a schematic cross-sectional view depicting the sparkless socket combined with the plug according to the first embodiment of the invention.
Fig. 7 is a schematic top view depicting a sparkless socket according to the second and the fourth embodiments of the invention.
Fig. 8A is a schematic cross-sectional view depicting the sparkless socket combined with a plug along a section line A1-A2 in Fig. 7 according to the second embodiment of the invention.
Fig. 8B is a schematic cross-sectional right view depicting the sparkless socket combined with the plug along a section line B1-B2 in Fig. 7 according to the second and the fourth embodiments of the invention.
Fig. 9 is a schematic circuit diagram depicting the sparkless socket according to the second embodiment of the invention.
Fig. 10A is a schematic cross-sectional view depicting the sparkless socket combined with the plug along a section line A1-A2 in Fig. 7 according to the second embodiment of the invention.
Fig. 10B is a schematic cross-sectional right view depicting the sparkless socket combined with the plug along the section line B1-B2 in Fig. 7 according to the second and the fourth embodiments of the invention.
Fig. 11 is a schematic cross-sectional view depicting a sparkless socket combined with a plug according to the third embodiment of the invention.
Fig. 12 is a schematic circuit diagram depicting the sparkless socket according to the third embodiment of the invention.
Fig. 13 is a schematic cross-sectional view depicting the sparkless socket combined with the plug according to the third embodiment of the invention.
Fig. 14 is a schematic cross-sectional view depicting the sparkless socket combined with the plug along the section line A1-A2 in Fig. 7 according to the fourth embodiment of the invention.
Fig. 15 is a schematic circuit diagram depicting the sparkless socket according to the fourth embodiment of the invention.
Fig. 16 is a schematic cross-sectional view depicting the sparkless socket combined with the plug along the section line A1-A2 in Fig. 7 according to the fourth embodiment of the invention.
Fig. 17 is a schematic top view depicting a sparkless socket according to the fifth and the sixth embodiments of the invention.
Fig. 18 is a schematic circuit diagram depicting the sparkless socket according to the fifth embodiment of the invention.
Fig. 19 is a schematic top view depicting the sparkless socket according to the fifth and the sixth embodiments of the invention.
Fig. 20 is a schematic structural three-dimensional view depicting a first light guide pillar of the sparkless socket according to the fifth and the sixth embodiments of the invention.
Fig. 21 is a schematic top view depicting the sparkless socket according to the sixth embodiment of the invention.
Fig. 22 is a schematic cross-sectional right view depicting the sparkless socket combined with the plug along a section line C1-C2 in Fig. 21 according to the sixth embodiment of the invention.
Fig. 23 is a schematic circuit diagram depicting the sparkless socket according to the sixth embodiment of the invention.
Fig. 24 is a schematic cross-sectional right view depicting the sparkless socket combined with the plug along the section line C1-C2 in Fig. 21 according to the sixth embodiment of the invention.
Fig. 25 is a schematic circuit block diagram of a switching module in Fig. 5, Fig. 9, Fig. 12, Fig. 15, Fig. 18, and Fig. 23.

### DESCRIPTION OF THE EMBODIMENTS

In order to make the present invention more comprehensible, embodiments are described below as the examples to prove that the invention can actually be realized. Moreover, wherever appropriate in the drawings and embodiments, elements/components/steps with the same reference numerals represent the same or similar parts.

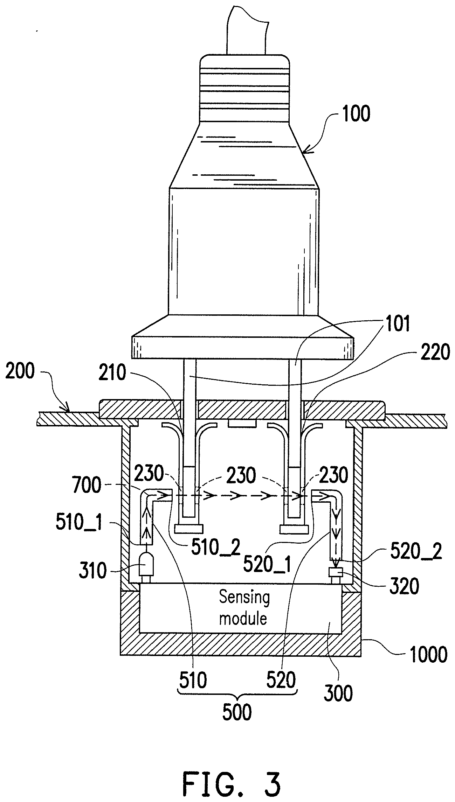

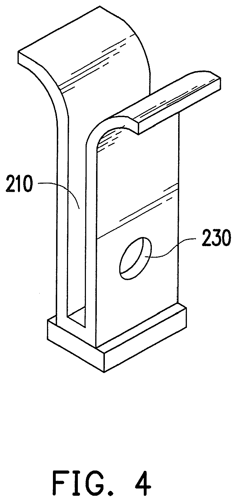

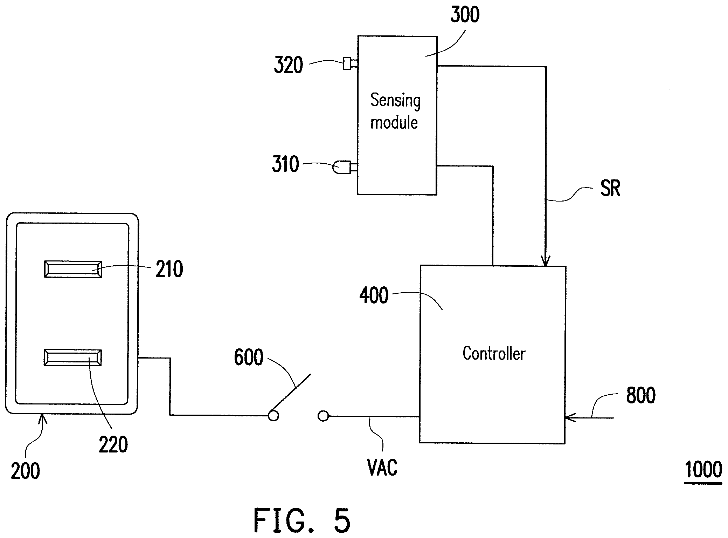

Referring to Figs. 3-6, Figs. 3-6 depict a sparkless (i.e. non-sparking or non-arcing) socket 1000 according to the first embodiment of the invention. The sparkless socket 1000 is configured to insert a pair of pins 101 of a plug 100. The sparkless socket 1000 includes a socket 200, a sensing module 300, a controller 400, and a switching module 600 (as shown in Fig. 5). A first slot 210 and a second slot 220 are configured in the socket 200. A through hole 230 is configured on a slot wall of each of the first slot 210 and the second slot 220, and the through holes 230 face each other.

An emitter 310 and a first receiver 320 are configured on the sensing module 300. The emitter 310 is configured to emit infrared light 700 and transmit the infrared light 700 through the through holes 230 to the first receiver 320 via the light guide element module 500. In the present embodiment, the light guide element module 500 includes a first light guide pillar 510 and a second light guide pillar 520. The first light guide pillar 510 is disposed between the first slot 210 and the emitter 310 and configured to guide the infrared light 700 emitted by the emitter 310. An entrance port 510_1 of the first light guide pillar 510 faces the emitter 310 so as to receive the infrared light 700 emitted by the emitter 310, and an exit port 510_2 of the first light guide pillar 510 faces the through hole 230 of the first slot 210. The second light guide pillar 520 is disposed between the second slot 220 and the first receiver 320. An entrance port 520_1 of the second light guide pillar 520 faces the through hole 230 of the second slot 220, and an exit port 520_2 of the second light guide pillar 520 faces the first receiver 320. The first slot 210 and the second slot 220 are disposed between the first light guide pillar 510 and the second light guide pillar 520. Therefore, the infrared light 700 emitted by the emitter 310 may be transmitted to the first receiver 320 via the first light guide pillar 510, the through hole 230 of the first slot 210, the through hole 230 of the second slot 220, and the second light guide pillar 520. The first receiver 320 may generate a sensing result SR according to whether the infrared light 700 is received.

The controller 400 is coupled to a city power system 800 and the sensing module 300, and configured to receive the sensing result SR from the sensing module 300. The switching module 600 is coupled between the socket 200 and the controller 400. The switching module 600 receives AC power VAC provided by the city power system 800 from the controller 400, moreover, the switching module 600 is controlled by the controller 400 to transmit the AC power VAC to the socket 200. The controller 400 controls the switching module 600 to be disabled or enabled according to the sensing result SR.

Accordingly, as shown in Fig. 3, when the pins 101 of the plug 100 are not inserted or are not completely inserted into the first slot 210 and the second slot 220 of the socket 200, the infrared light 700 emitted by the emitter 310 is transmitted to the first receiver 320 via the first light guide pillar 510, the through hole 230 on the slot wall of the first slot 210, the through hole 230 on the slot wall of the second slot 220, and the second light guide pillar 520 sequentially. When the first receiver 320 senses the infrared light 700, the sensing module 300 transmits the sensing result SR to the controller 400. At this time, the controller 400 may control the switching module 600 to be disabled so that the AC power VAC from the city power system 800 is unable to be provided to the socket 200 through the switching module 600.

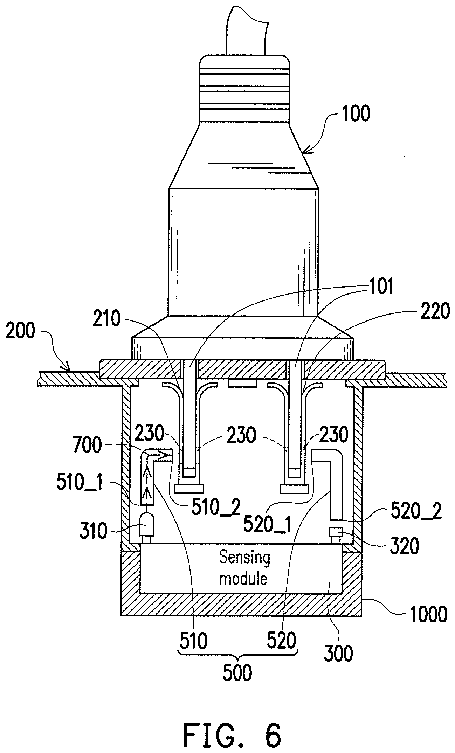

As shown in Fig. 6, after the pins 101 of the plug 100 are completely inserted into the first slot 210 and the second slot 220 of the socket 200, the pins 101 of the plug 100 cover the through hole 230 on the slot wall of the first slot 210, thereby blocking the infrared light 700 guided by the first light guide pillar 510. As a result, the infrared light 700 is unable to reach the first receiver 320. At this time, the first receiver 320 may transmit the sensing result SR that the infrared light 700 is unable to be sensed by the first receiver 320 to the controller 400. Therefore, the controller 400 may then switch the switching module 600 to be enabled so that the AC power VAC from the city power system 800 is able to be transmitted to the socket 200 through the switching module 600, and thereby providing the required load power to the plug 100. In contrast, during power supply operation, once the plug 100 is loose and not completely inserted into the first slot 210 and the second slot 220 of the socket 200, or once the pins 101 of the plug 100 are pulled out from the first slot 210 and the second slot 220 of the socket 200, the first receiver 320 can sense the infrared light 700 (as shown in Fig. 3), and immediately the controller 400 switches the switching module 600 to be disabled (e.g. within 0.015 seconds or within 15 milliseconds). As a result, sparks are prevented from being generated between the pins 101 and the first slot 210 and the second slot 220, and therefore, from causing dangers.

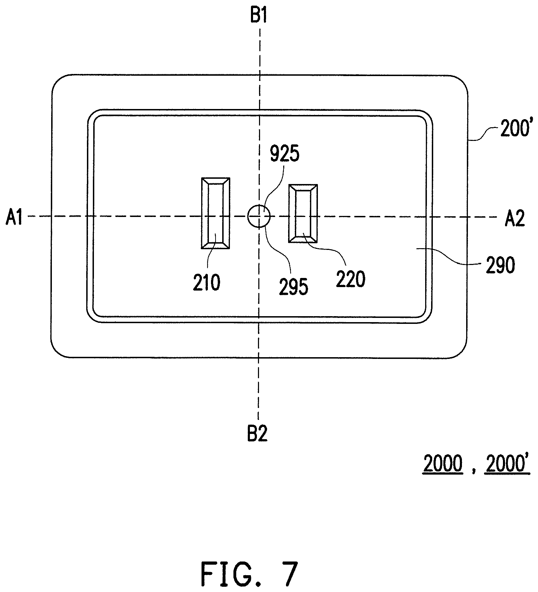

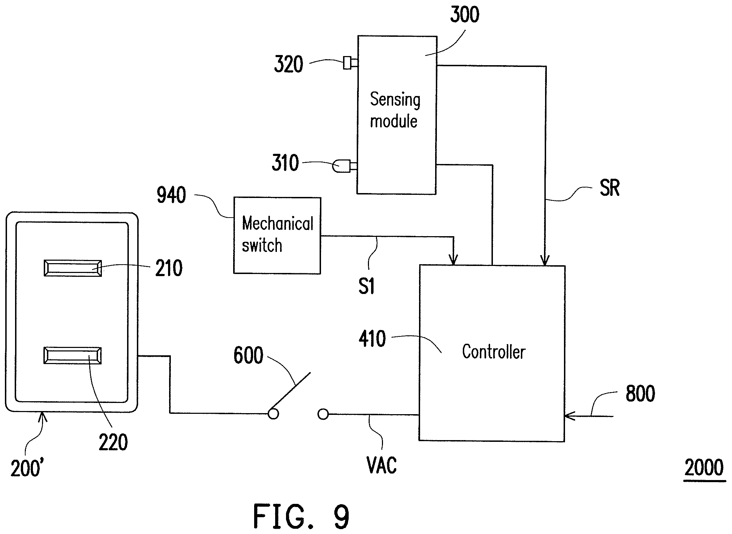

Figs. 7-10B are referred to hereinafter. Figs. 7-10B depict the sparkless socket 2000 according to the second embodiment of the invention. Similarly, the sparkless socket 2000 includes a socket 200', a sensing module 300, a controller 410, and a switching module 600 (as shown in Fig. 9). A first slot 210 and a second slot 220 are configured in the socket 200'. A through hole 230 is configured on a slot wall of each of the first slot 210 and the second slot 220, and the through holes 230 face each other. An emitter 310 and a first receiver 320 are configured on the sensing module 300. The emitter 310 is configured to emit infrared light 700 and transmit the infrared light 700 through the through holes 230 to the first receiver 320 via the light guide element module 500. The operations of the sensing module 300, the emitter 310, the first receiver 320, the light guide element module 500, and the switching module 600 of the present embodiment are respectively similar to the operations of the sensing module 300, the emitter 310, the first receiver 320, the light guide element module 500, and the switching module 600 shown in Fig. 3-Fig. 6, the details can reference to the related description above and will not be repeated.

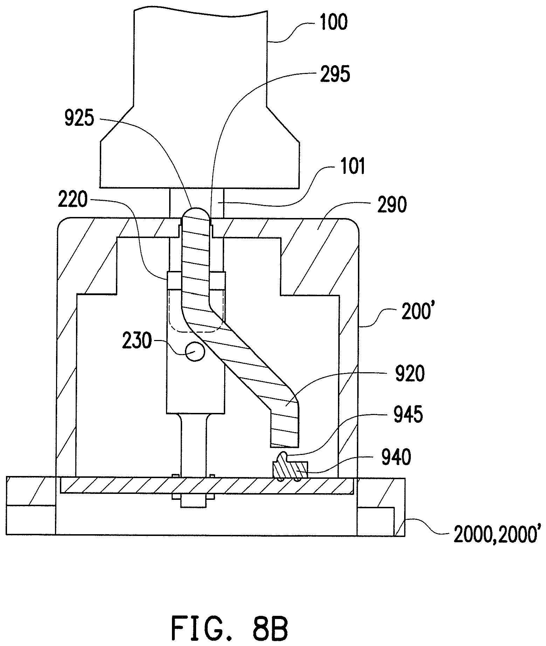

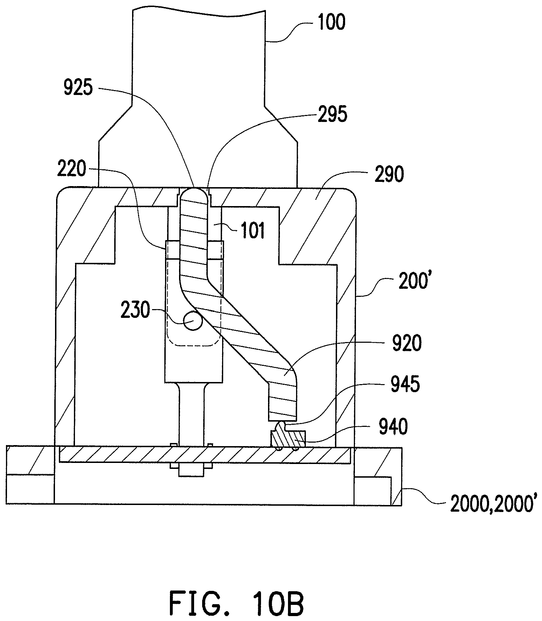

In comparison with the embodiment in Figs. 3-6, the socket 200' of the present embodiment further includes a front wall 290, wherein the front wall 290 has an aperture 295. The aperture 295 is located between the first slot 210 and the second slot 220, as shown in Fig. 7. Moreover, the sparkless socket 2000 further includes a pressing stick 920 and a mechanical switch 940, as shown in Fig. 8B or Fig. 10B. The pressing stick 920 is disposed in an inner space of the socket 200'. An end of the pressing stick 920 protrudes from the socket 200' via the aperture 295 of the front wall 290 so as to form a protrusion part 925, wherein the material of the pressing stick 920 could be insulating material, but the invention is not limited thereto. In other embodiments of the invention, if there is sufficient isolation space between the pressing stick 920 and the first slot 210 and between the pressing stick 920 and the second slot 220, the pressing stick 920 can be actualized by adopting non-insulating materials. The mechanical switch 940 has a control terminal 945. The control terminal 945 of the mechanical switch 940 faces another end of the pressing stick 920. The mechanical switch 940 is controlled by the pressing stick 920 so as to generate a first signal S1 (as shown in Fig. 8B, Fig. 9, and Fig. 10B). In one embodiment of the invention, the mechanical switch 940 may be, for example, a micro switch, wherein the control terminal 945 of the mechanical switch 940 may be, for example, a push button of the micro switch, but the invention is not limited thereto.

In comparison with the circuit structure of the sparkless socket 1000 shown in Fig. 5, the controller 410 of the sparkless socket 2000 in Fig. 9 is further coupled to the mechanical switch 940 so as to receive the first signal S1. When the controller 410 determines that the first receiver 320 does not receive the infrared light 700 according to the sensing result SR and determines that the another end of the pressing stick 920 presses the control terminal 945 of the mechanical switch 940 (as shown in Fig. 10B) according to the first signal S1, the controller 410 enables the switching module 600, and otherwise, the controller 410 disables the switching module 600. The details related to the operation that the controller 410 determines whether to enable the switching module 600 according to the sensing result SR may reference the above description of the operation of the controller 400 in Figs. 3-6, and will not be repeated. The operations that the controller 410 determines whether to enable the switching module 600 according to the first signal S1 are described hereinafter.

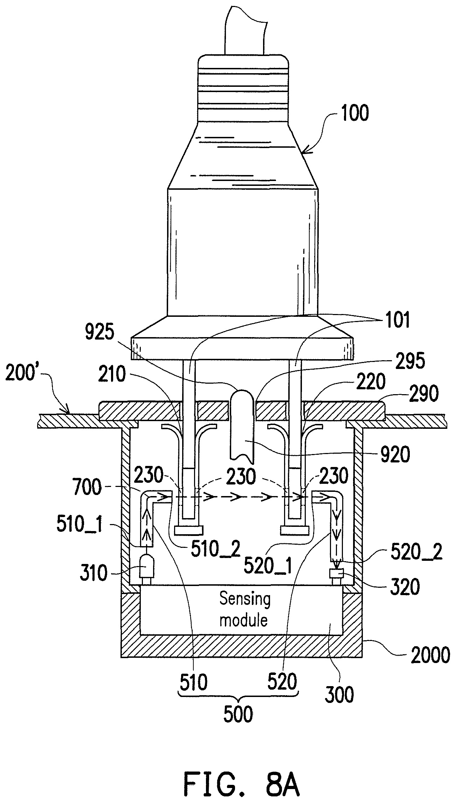

As shown in Fig. 8A and Fig. 8B, when the plug 100 does not touch and does not press the protrusion part 925 (namely, the plug 100 is not completely inserted into the first slot 210 and the second slot 220 of the socket 200'), the another end of the pressing stick 920 is not in contact with the control terminal 945 of the mechanical switch 940. At this time, the controller 410 in Fig. 9 may control the switching module 600 to be disabled according to the first signal S1 (such as the first electrical level) so that the AC power VAC from the city power system 800 is unable to be provided to the socket 200' through the switching module 600.

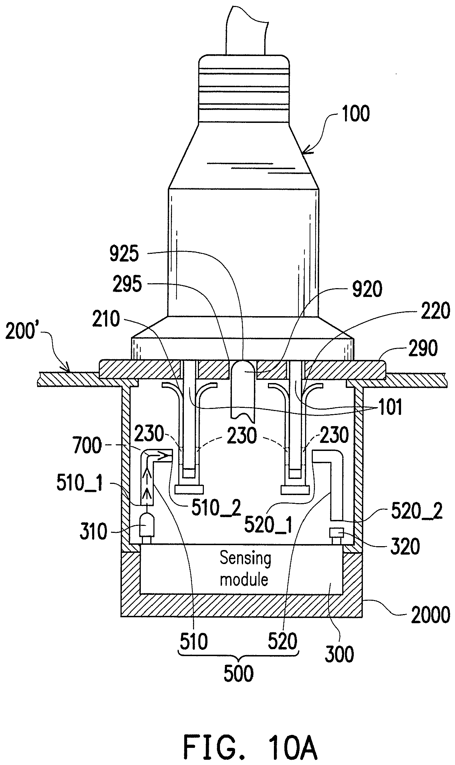

Fig. 8A together with Fig. 8B, Fig. 10A, and Fig. 10B are referred to hereinafter. As shown in Fig. 10A and Fig. 10B, when the pins 101 of the plug 100 are completely inserted into the first slot 210 and the second slot 220 of the socket 200', the plug 100 presses the protrusion part 925 to cause the pressing stick 920 to move, so that the another end of the pressing stick 920 presses the control terminal 945 of the mechanical switch 940. As a result, the mechanical switch 940 generates the first signal S1 (such as the second electrical level) in response to the pressing action of the pressing stick 920. At this time, the controller 410 may then switch the switching module 600 to be enabled according to the first signal S1 so that the AC power VAC from the city power system 800 could be transmitted through the switching module 600 to the socket 200', and thereby providing the required load power to the plug 100. In contrast, during power supply operation, once the plug 100 is loose and not completely inserted into the first slot 210 and the second slot 220 of the socket 200', or once the pins 101 of the plug 100 are pulled out from the first slot 210 and the second slot 220 of the socket 200', the plug 100 does not press the protrusion part 925 so that the pressing stick 920 returns to the original position and the another end of the pressing stick 920 is not in contact with the control terminal 945 of the mechanical switch 940, as shown in Fig. 8A and Fig. 8B. At this time, the controller 410 may switch the switching module 600 to be disabled. As a result, sparks are prevented from being generated between the pins 101 and the first slot 210 and the second slot 220, and therefore, from causing dangers.

Generally, when the first receiver 320 is able to sense the infrared light 700 or the another end of the pressing stick 920 is not in contact with the control terminal 945 of the mechanical switch 940, it represents that the plug 100 is loose and not completely inserted into the first slot 210 and the second slot 220 of the socket 200', or the pins 101 of the plug 100 are pulled out from the first slot 210 and the second slot 220 of the socket 200'. At this time, the controller 410 may switch the switching module 600 to be disabled. As a result, sparks are prevented from being generated between the pins 101 and the first slot 210 and the second slot 220, and therefore, from causing dangers. In contrast, when the first receiver 320 is unable to sense the infrared light 700 and the another end of the pressing stick 920 presses the control terminal 945 of the mechanical switch 940, it represents that the pins 101 of the plug 100 are completely inserted into the first slot 210 and the second slot 220 of the socket 200'. At this time, the controller 410 may then switch the switching module 600 to be enabled so that the AC power VAC from the city power system 800 is able to be transmitted through the switching module 600 to the socket 200', and thereby providing the required load power to the plug 100.

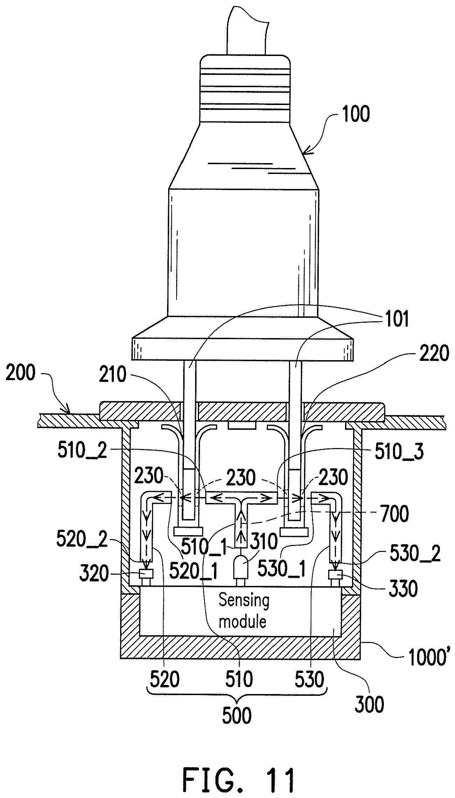

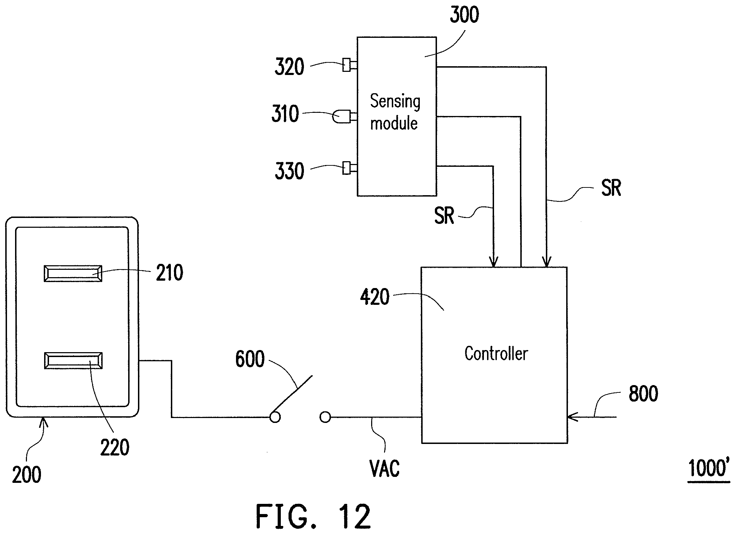

Figs. 11-13 are referred to hereinafter. Figs. 11-13 depict a sparkless socket 1000' according to the third embodiment of the invention. The sparkless socket 1000' is configured to insert a pair of pins 101 of a plug 100. The sparkless socket 1000' includes a socket 200, a sensing module 300, a controller 420, and a switching module 600 (as shown in Fig. 12). A first slot 210 and a second slot 220 are configured in the socket 200. A through hole 230 is configured on a slot wall of each of the first slot 210 and the second slot 220, and the through holes 230 face each other.

An emitter 310, a first receiver 320, and a second receiver 330 are configured on the sensing module 300, wherein the emitter 310 is disposed between the first receiver 320 and the second receiver 330. The emitter 310 is configured to emit infrared light 700 and transmit the infrared light 700 through the through holes 230 to the first receiver 320 and the second receiver 330 respectively via the light guide element module 500.

In the present embodiment, the light guide element module 500 includes a first light guide pillar 510, a second light guide pillar 520, and a third light guide pillar 530. The first light guide pillar 510 is a T-shaped structure, disposed among the first slot 210, the second slot 220, and the emitter 310, and configured to guide the infrared light 700 emitted by the emitter 310. An entrance port 510_1 of the first light guide pillar 510 faces the emitter 310 so as to receive the infrared light 700 emitted by the emitter 310. An exit port 510_2 of the first light guide pillar 510 faces the through hole 230 of the first slot 210, and another exit port 510_3 of the first light guide pillar 510 faces the through hole 230 of the second slot 220. The second light guide pillar 520 is disposed between the first slot 210 and the first receiver 320. An entrance port 520_1 of the second light guide pillar 520 faces the through hole 230 of the first slot 210, and an exit port 520_2 of the second light guide pillar 520 faces the first receiver 320. The third light guide pillar 530 is disposed between the second slot 220 and the second receiver 330. An entrance port 530_1 of the third light guide pillar 530 faces the through hole 230 of the second slot 220, and an exit port 530_2 of the third light guide pillar 530 faces the second receiver 330.

To be specific, the infrared light 700 emitted by the emitter 310 may be transmitted to the first receiver 320 via the first light guide pillar 510, the through hole 230 of the first slot 210, and the second light guide pillar 520. The first receiver 320 may generate a first sensing result according to whether the infrared light 700 is received. Similarly, the infrared light 700 emitted by the emitter 310 may be transmitted to the second receiver 330 via the first light guide pillar 510, the through hole 230 of the second slot 220, and the third light guide pillar 530. The second receiver 330 may generate a second sensing result according to whether the infrared light 700 is received.

The controller 420 is coupled to a city power system 800 and the sensing module 300, and configured to receive the sensing result SR from the sensing module 300. The switching module 600 is coupled between the socket 200 and the controller 420. In addition, the switching module 600 receives AC power VAC provided by the city power system 800 from the controller 420, moreover, the switching module 600 is controlled by the controller 420 to transmit the AC power VAC to the socket 200. The controller 420 controls the switching module 600 to be disabled or enabled according to the sensing result SR.

Accordingly, referring to Fig. 11, when the pins 101 of the plug 100 are not inserted or are not completely inserted into the first slot 210 and the second slot 220 of the socket 200, the infrared light 700 emitted by the emitter 310, firstly, passes the T-shaped first light guide pillar 510. After the infrared light 700 enters the first light guide pillar 510, it is incident in both left and right directions and towards the first slot 210 and the second slot 220 respectively. The infrared light 700 which is incident towards the first slot 210 passes through the through hole 230 on the slot wall of the first slot 210 and is transmitted to the first receiver 320 via the second light guide pillar 520. The infrared light 700 which is incident towards the second slot 220 passes through the through hole 230 on the slot wall of the second slot 220 and is transmitted to the second receiver 330 via the third light guide pillar 530. When any one or both of the first receiver 320 and the second receiver 330 sense the infrared light 700, the sensing module 300 transmits the sensing result SR to the controller 420. At this time, the controller 420 may control the switching module 600 to be disabled so that the AC power VAC from the city power system 800 is unable to be provided to the socket 200 through the switching module 600.

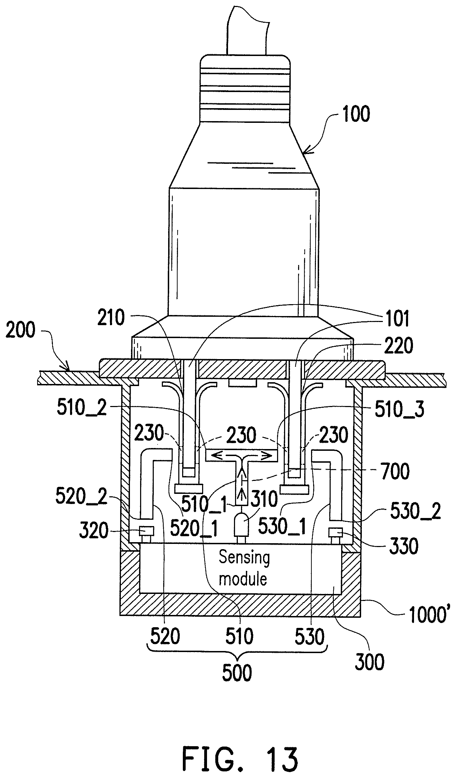

Referring to Fig. 13, after the pins 101 of the plug 100 are completely inserted into the first slot 210 and the second slot 220 of the socket 200, the pins 101 of the plug 100 cover the through holes 230 on the slot walls of the first slot 210 and the second slot 220, and thereby blocking the infrared light 700 transmitted via the first light guide pillar 510. As a result, the infrared light 700 is unable to reach the first receiver 320 and the second receiver 330. At this time, the first receiver 320 and the second receiver 330 may transmit the sensing result SR that the infrared light 700 is unable to be sensed to the controller 420. At this time, the controller 420 may then switch the switching module 600 to be enabled so that the AC power VAC from the city power system 800 is able to be transmitted through the switching module 600 to the socket 200, and thereby providing the required load power to the plug 100. By contrast, during power supply operation, once the first receiver 320 or the second receiver 330 senses the infrared light 700 (as shown in Fig. 11), immediately, the controller 420 switches the switching module 600 to be disabled (e.g. within 0.015 seconds or within 15 milliseconds). As a result, sparks are prevented from being generated between the pins 101 and the first slot 210 and the second slot 220, and therefore, from causing dangers.

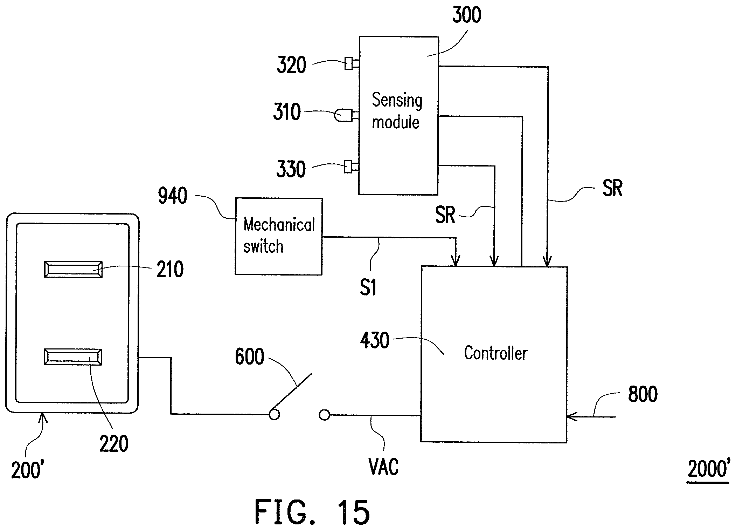

Fig. 7 together with Fig. 8B, Fig. 10B, and Figs. 14-16 are referred to hereinafter. Fig. 7, Fig. 8, Fig. 10B, and Figs. 14-16 depict a sparkless socket 2000' according to the fourth embodiment of the invention. Similarly, the sparkless socket 2000' of the present embodiment includes a socket 200', a sensing module 300, a controller 430, and a switching module 600 (as shown in Fig. 15). A first slot 210 and a second slot 220 are configured in the socket 200'. A through hole 230 is configured on a slot wall of each of the first slot 210 and the second slot 220, and the through holes 230 face each other. An emitter 310, a first receiver 320, and a second receiver 330 are configured on the sensing module 300, wherein the emitter 310 is disposed between the first receiver 320 and the second receiver 330. The emitter 310 is configured to emit infrared light 700 and transmit the infrared light 700 through the through holes 230 to the first receiver 320 and the second receiver 330 respectively via the light guide element module 500. The operations of the sensing module 300, the emitter 310, the first receiver 320, the second receiver 330, the light guide element module 500, and the switching module 600 of the present embodiment are respectively similar to the operations of the sensing module 300, the emitter 310, the first receiver 320, the second receiver 330, the light guide element module 500, and the switching module 600 shown in Fig. 11-Fig. 13, the details can reference to the related description above and will not be repeated.

In comparison with the embodiment in Figs. 11-13, the socket 200' of the present embodiment further includes a front wall 290, wherein the front wall 290 has an aperture 295. The aperture 295 is located between the first slot 210 and the second slot 220, as shown in Fig. 7. Moreover, the sparkless socket 2000' further includes a pressing stick 920 and a mechanical switch 940, as shown in Fig. 8B. The pressing stick 920 is disposed in an inner space of the socket 200'. An end of the pressing stick 920 protrudes from the socket 200' via the aperture 295 of the front wall 290 so as to form a protrusion part 925, wherein the material of the pressing stick 920 may be insulation material. The mechanical switch 940 has a control terminal 945. The control terminal 945 of the mechanical switch 940 faces another end of the pressing stick 920. The mechanical switch 940 is controlled by the pressing stick 920 so as to generate a first signal S1 (as shown in Fig. 8B, Fig. 10B, and Fig. 15).

In comparison with the circuit structure of the sparkless socket 1000' shown in Fig. 12, the controller 430 of the sparkless socket 2000' in Fig. 15 is further coupled to the mechanical switch 940 so as to receive the first signal S1. When the controller 430 determines that none of the first receiver 320 and the second receiver 330 receives the infrared light 700 according to the sensing result SR, and determines that the another end of the pressing stick 920 presses the control terminal 945 of the mechanical switch 940 according to the first signal S1, the controller 430 enables the switching module 600, and otherwise, the controller 430 disables the switching module 600. The details related to the operation that the controller 430 determines whether to enable the switching module 600 according to the sensing result SR may reference the above description of the operation of the controller 420 in Figs. 11-13, and will not be repeated. The details related to the operation that the controller 430 determines whether to enable the switching module 600 according to the first signal S1 may reference the above description of the operation of the controller 410 in Figs. 7-10B, and will not be repeated.

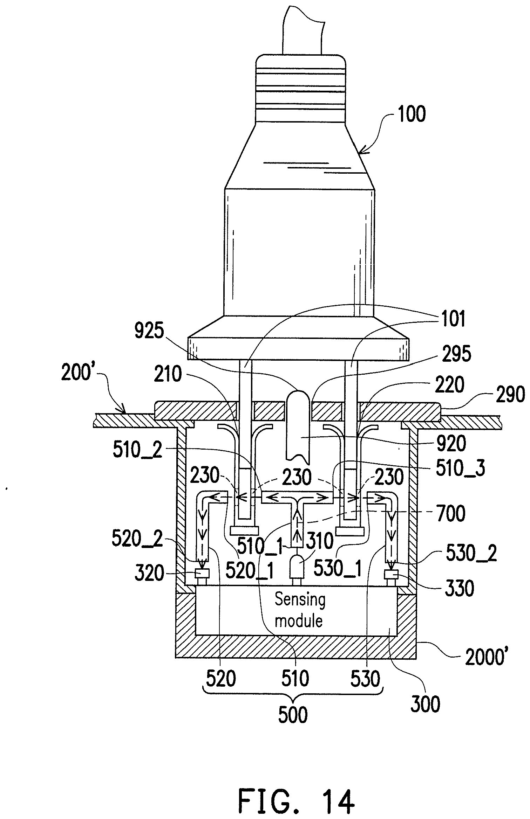

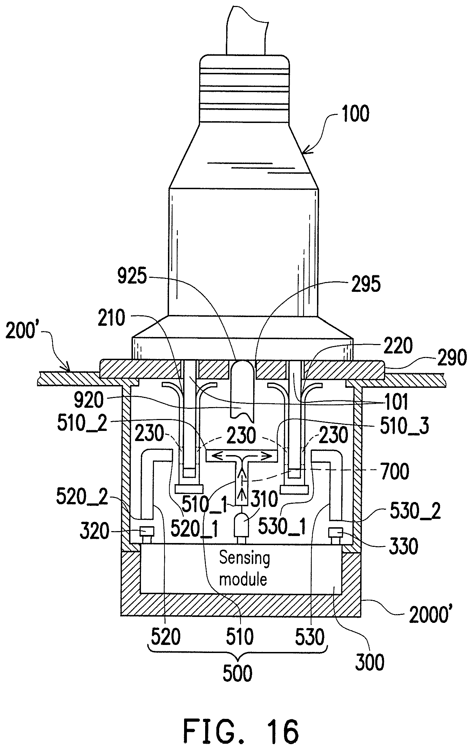

Generally, when the first receiver 320 or the second receiver 330 is able to sense the infrared light 700 or the another end of the pressing stick 920 is not in contact with the control terminal 945 of the mechanical switch 940 (as shown in Fig. 8B and Fig. 14), it represents that the plug 100 is loose and not completely inserted into the first slot 210 and the second slot 220 of the socket 200', or the pins 101 of the plug 100 are pulled out from the first slot 210 and the second slot 220 of the socket 200'. At this time, the controller 430 may switch the switching module 600 to be disabled. As a result, sparks are prevented from being generated between the pins 101 and the first slot 210 and the second slot 220, and therefore, from causing dangers. In contrast, when the first receiver 320 and the second receiver 330 are unable to sense the infrared light 700 and the another end of the pressing stick 920 presses the control terminal 945 of the mechanical switch 940(as shown in Fig. 10B and Fig. 16), it represents that the pins 101 of the plug 100 are completely inserted into the first slot 210 and the second slot 220 of the socket 200'. At this time, the controller 430 may then switch the switching module 600 to be enabled so that the AC power VAC from the city power system 800 is able to be transmitted through the switching module 600 to the socket 200', and thereby providing the required load power to the plug 100.

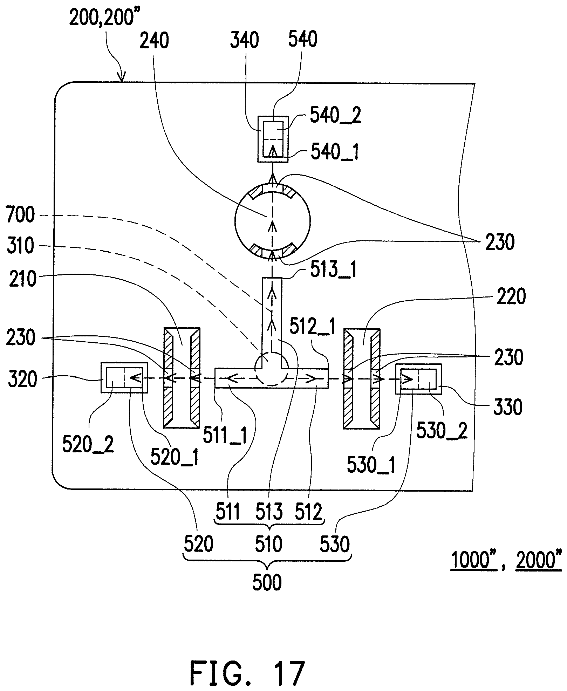

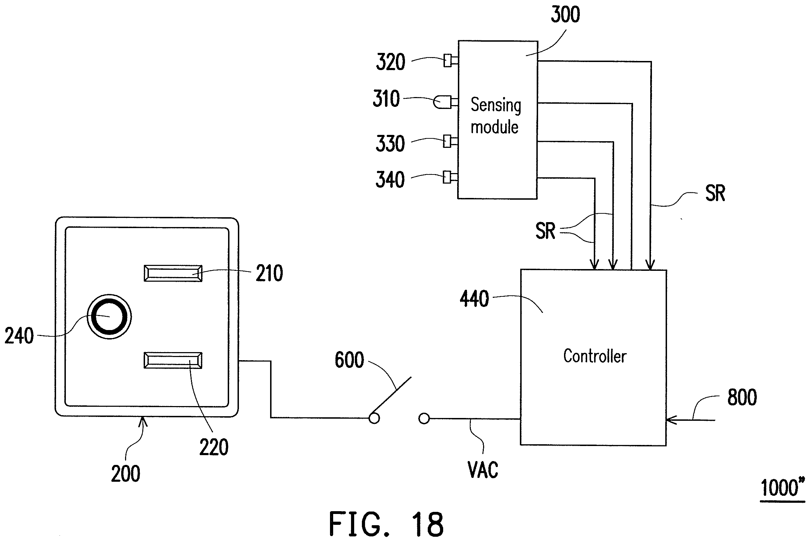

Figs. 17-20 are referred to hereinafter. Figs. 17-20 depict a sparkless socket 1000" according to the fifth embodiment of the invention. The sparkless socket 1000" is configured to insert three pins 101 of a plug 100. The sparkless socket 1000" includes a socket 200, a sensing module 300, a controller 440, and a switching module 600 (as shown in Fig. 18). The socket 200 includes a first slot 210, a second slot 220, and a third slot 240 at a different direction from the first slot 210 and the second slot 220. A through hole 230 is configured on a slot wall of each of the first slot 210, the second slot 220, and the third slot 240. The light of the same light source may pass through the three through holes 230 at the same time.

An emitter 310, a first receiver 320, a second receiver 330, and a third receiver 340 are configured on the sensing module 300. The emitter 310 is configured to emit infrared light 700 and transmit the infrared light 700 through the through holes 230 to the first receiver 320, the second receiver 330, and the third receiver 340 respectively via the light guide element module 500.

In the present embodiment, the light guide element module 500 includes a first light guide pillar 510, a second light guide pillar 520, a third light guide pillar 530, and a fourth light guide pillar 540. The first light guide pillar 510 is disposed among the first slot 210, the second slot 220, the third slot 240, and the emitter 310, and configured to guide the infrared light 700 emitted by the emitter 310. An entrance port 514_1 of the first light guide pillar 510 faces the emitter 310 so as to receive the infrared light 700 emitted by the emitter 310, three exit ports 511_1, 512_1, and 513_1 of the first light guide pillar 510 faces the through hole 230 of the first slot 210, the through hole 230 of the second slot 220, and the through hole 230 of the third slot 240 respectively.

The second light guide pillar 520 is disposed between the first slot 210 and the first receiver 320. An entrance port 520_1 of the second light guide pillar 520 faces the through hole 230 of the first slot 210, and an exit port 520_2 of the second light guide pillar 520 faces the first receiver 320. The third light guide pillar 530 is disposed between the second slot 220 and the second receiver 330. An entrance port 530_1 of the third light guide pillar 530 faces the through hole 230 of the second slot 220, and an exit port 530_2 of the third light guide pillar 530 faces the second receiver 330. The fourth light guide pillar 540 is disposed between the third slot 240 and the third receiver 340. An entrance port 540_1 of the fourth light guide pillar 540 faces the through hole 230 of the third slot 240, and an exit port 540_2 of the fourth light guide pillar 540 faces the third receiver 340.

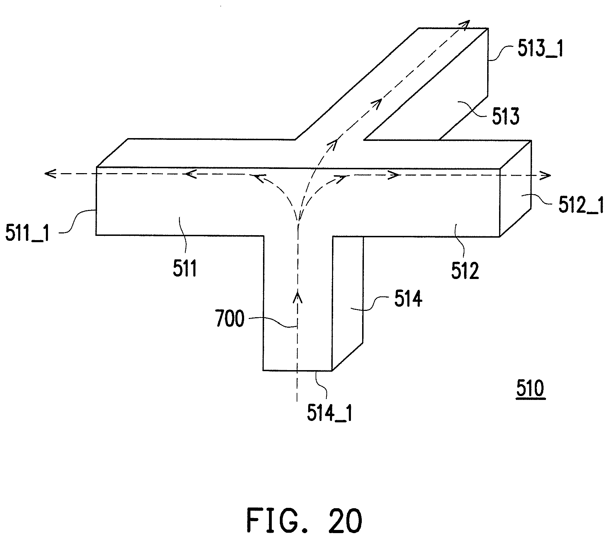

The first light guide pillar 510 includes a first pin 511, a second pin 512, a third pin 513, and a fourth pin 514. As shown in Fig. 20, the first pin 511, the second pin 512, the third pin 513, and the fourth pin 514 are connected to each other to form a three-dimensional double T-shaped structure. Wherein, the first pin 511, the second pin 512, and the third pin 513 are connected to each other to form a T-shaped structure, and the first pin 511, the second pin 512, and the fourth pin 514 are connected to each other to form another T-shaped structure, furthermore, the third pin 513 and the fourth pin 514 are connected to form an inverted-L structure. The entrance port 514_1 of the first light guide pillar 510 is disposed at the fourth pin 514, and the three exit ports 511_1, 512_1, and 513_1 of the first light guide pillar 510 are respectively disposed at the first pin 511, the second pin 512, and the third pin 513.

Hence, referring to Fig. 17, Fig. 18, and Fig. 20. When the three pins 101 of the plug 100 are not inserted or are not completely inserted into the first slot 210, the second slot 220, and the third slot 240 of the socket 200, the infrared light 700 emitted by the emitter 310, firstly, passes through the fourth pin 514 of the first light guide pillar 510. Next, the infrared light 700 passing through the fourth pin 514 passes through the through holes 230 on the slot walls of the first slot 210, the second slot 220, and the third slot 240 via the first pin 511, the second pin 512, and the third pin 513 respectively. The infrared light 700 passing through the through hole 230 of the first slot 210 is transmitted to the first receiver 320 via the second light guide pillar 520, the infrared light 700 passing through the through hole 230 of the second slot 220 is transmitted to the second receiver 330 via the third light guide pillar 530, and the infrared light 700 passing through the through hole 230 of the third slot 240 is transmitted to the third receiver 340 via the fourth light guide pillar 540. When the first receiver 320, the second receiver 330, and the third receiver 340 sense the infrared light 700, the sensing module 300 transmits the sensing result SR to the controller 440. At this time, the controller 440 may control the switching module 600 to be disabled so that the AC power VAC from the city power system 800 is unable to be provided to the socket 200 through the switching module 600.

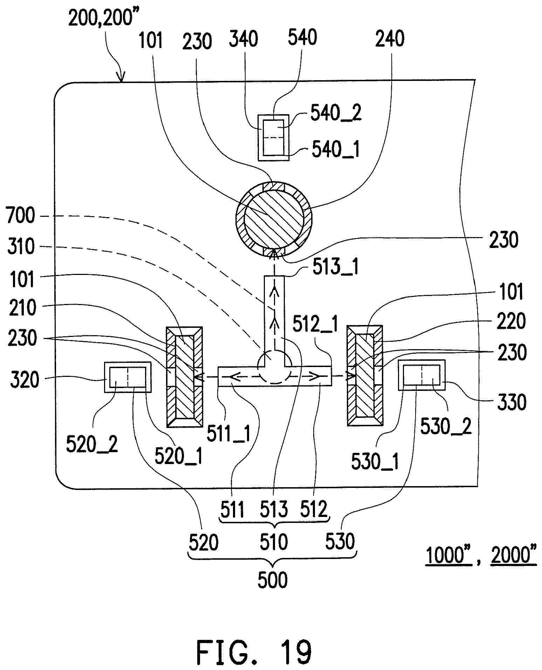

Referring to Fig. 19, after the pins 101 of the plug 100 are completely inserted into the first slot 210, the second slot 220, and the third slot 240 of the socket 200, the pins 101 of the plug 100 cover the through hole 230 of each of the first slot 210, the second slot 220, and the third slot 240, and thereby blocking the infrared light 700 guided by the first light guide pillar 510. As a result, the infrared light 700 is unable to reach the first receiver 320, the second receiver 330, and the third receiver 340. At this time, the first receiver 320, the second receiver 330, and the third receiver 340 may transmit the sensing result SR that the infrared light 700 is unable to be sensed to the controller 440. At this time, the controller 440 may then switch the switching module 600 to be enabled so that the AC power VAC from the city power system 800 is able to be transmitted to the socket 200 via the switching module 600, and thereby providing the required load power to the plug 100. By contrast, during power supply operation, once any of the first receiver 320, the second receiver 330, and the third receiver 340 senses the infrared light 700, immediately, the controller 440 switches the switching module 600 to be disabled (e.g. within 0.015 seconds or within 15 milliseconds). It should be noted here, the third slot 240 is often connected to the ground, and thus it is sometimes not in use. In such instance, extra software or hardware options may be provided for assistances. For example, a software option may be used for setting so as to allow the controller 440 to neglect the third sensing result from the third receiver 340 when determining whether the pins 101 of the plug 100 are completely inserted into the first slot 210, the second slot 220, and the third slot 240 of the socket 200.

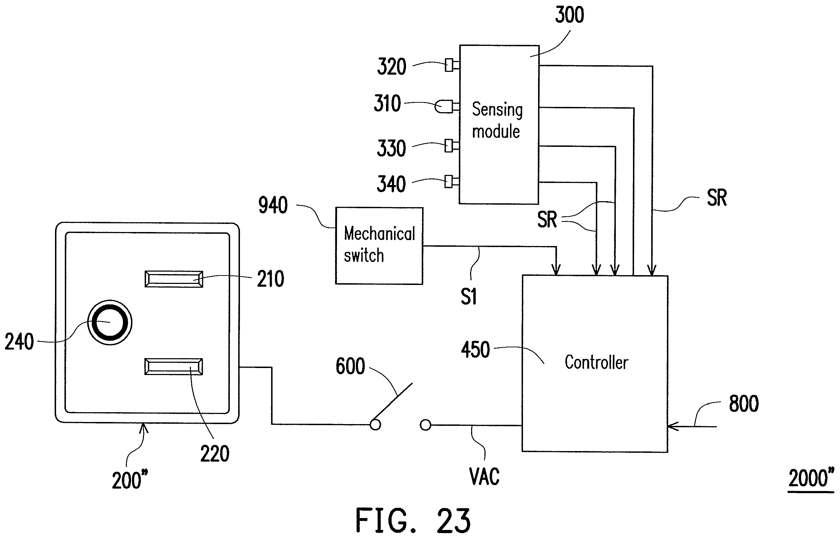

Fig. 17 and Figs. 19-24 are referred to hereinafter. Fig. 17 and Figs. 19-24 depict the sparkless socket 2000" according to the sixth embodiment of the invention. Similarly, the sparkless socket 2000" of the present embodiment includes a socket 200", a sensing module 300, a controller 450, and a switching module 600 (as shown in Fig. 23). The socket 200" includes a first slot 210, a second slot 220, and a third slot 240 at a different direction from the first slot 210 and the second slot 220. A through hole 230 is configured on a slot wall of each of the first slot 210, the second slot 220, and the third slot 240. The light of the same light source may pass through the three through holes 230 at the same time. An emitter 310, a first receiver 320, a second receiver 330, and a third receiver 340 are configured on the sensing module 300. The emitter 310 is configured to emit infrared light 700 and transmit the infrared light 700 through the through holes 230 to the first receiver 320, the second receiver 330, and the third receiver 340 respectively via the light guide element module 500. The operations of the sensing module 300, the emitter 310, the first receiver 320, the second receiver 330, the third receiver 340, the light guide element module 500, and the switching module 600 of the present embodiment are respectively similar to the operations of the sensing module 300, the emitter 310, the first receiver 320, the second receiver 330, the third receiver 340, the light guide element module 500, and the switching module 600 shown in Fig. 17-Fig. 19, the details can reference to the related description above and will not be repeated.

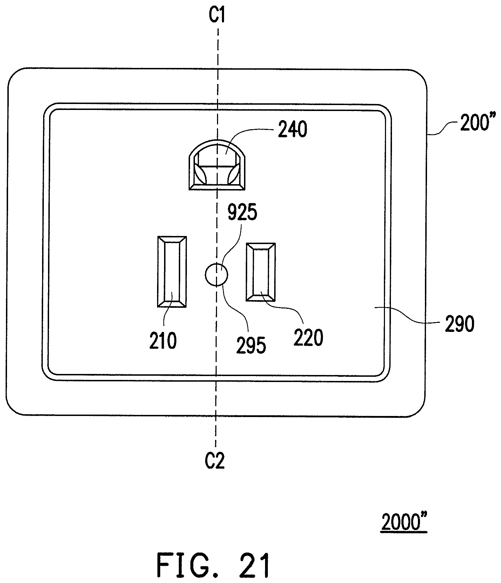

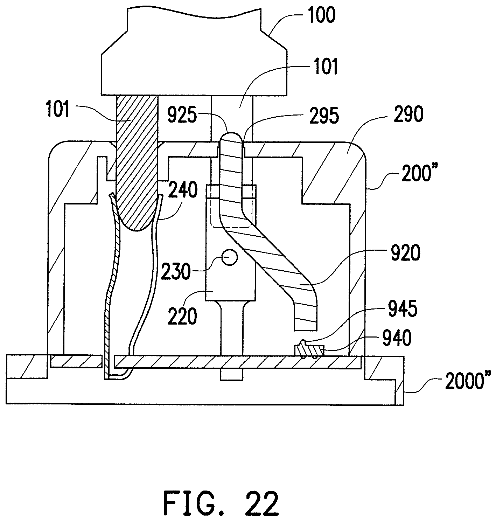

In comparison with the embodiment in Figs. 17-19, the socket 200" of the present embodiment further includes a front wall 290, wherein the front wall 290 has an aperture 295. The aperture 295 is located among the first slot 210, the second slot 220, and third slot 240, as shown in Fig. 21. Moreover, the sparkless socket 2000" further includes a pressing stick 920 and a mechanical switch 940, as shown in Fig. 22. The pressing stick 920 is disposed in an inner space of the socket 200". An end of the pressing stick 920 protrudes from the socket 200" via the aperture 295 of the front wall 290 so as to form a protrusion part 925, wherein the material of the pressing stick 920 may be insulation material. The mechanical switch 940 has a control terminal 945. The control terminal 945 of the mechanical switch 940 faces another end of the pressing stick 920. The mechanical switch 940 is controlled by the pressing stick 920 so as to generate a first signal S1 (as shown in Figs. 22-24).

In comparison with the circuit structure of the sparkless socket 1000" shown in Fig. 18, the controller 450 of the sparkless socket 2000" in Fig. 23 is further coupled to the mechanical switch 940 so as to receive the first signal S1. When the controller 450 determines that none of the first receiver 320, the second receiver 330, and the third receiver 340 receives the infrared light 700 according to the sensing result SR, and determines that the another end of the pressing stick 920 presses the control terminal 945 of the mechanical switch 940 according to the first signal S 1, the controller 450 enables the switching module 600, and otherwise, the controller 450 disables the switching module 600. The details related to the operation that the controller 450 determines whether to enable the switching module 600 according to the sensing result SR may reference the above description of the operation of the controller 440 in Figs. 17-20, and will not be repeated. The details related to the operation that the controller 450 determines whether to enable the switching module 600 according to the first signal S1 may reference the above description of the operation of the controller 410 in Figs. 7-10B, and will not be repeated.

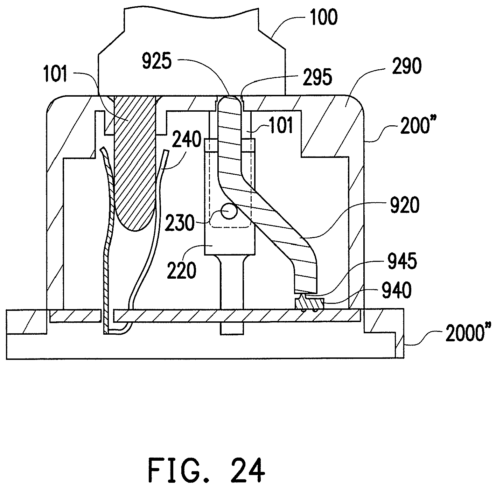

Generally, when any of the first receiver 320, the second receiver 330, or the third receiver 340 is able to sense the infrared light 700 or the another end of the pressing stick 920 is not in contact with the control terminal 945 of the mechanical switch 940 (as shown in Fig. 17 and Fig. 22), it represents that the plug 100 is loose and not completely inserted into the first slot 210, the second slot 220, and the third slot 240 of the socket 200", or the pins 101 of the plug 100 are pulled out from the first slot 210, the second slot 220, and the third slot 240 of the socket 200". At this time, the controller 450 may switch the switching module 600 to be disabled. As a result, sparks are prevented from being generated between the pins 101 and any of the first slot 210, the second slot 240, or the third slot 240, and therefore, from causing dangers. In contrast, when none of the first receiver 320, the second receiver 330, and the third receiver 340 senses the infrared light 700, and the another end of the pressing stick 920 presses the control terminal 945 of the mechanical switch 940 (as shown in Fig. 19 and Fig. 24), it represents that the pins 101 of the plug 100 are completely inserted into the first slot 210, the second slot 220, and the third slot 240 of the socket 200". At this time, the controller 450 may then switch the switching module 600 to be enabled so that the AC power VAC from the city power system 800 is able to be transmitted to the socket 200" via the switching module 600, and thereby providing the required load power to the plug 100.

Similarly, the third slot 240 is often connected to the ground, and thus it is sometimes not in use. In such instance, extra software or hardware options may be provided for assistances. For example, a software option may be used for setting so as to allow the controller 450 to neglect the third sensing result from the third receiver 340 when determining whether the pins 101 of the plug 100 are completely inserted into the first slot 210, the second slot 220, and the third slot 240 of the socket 200".

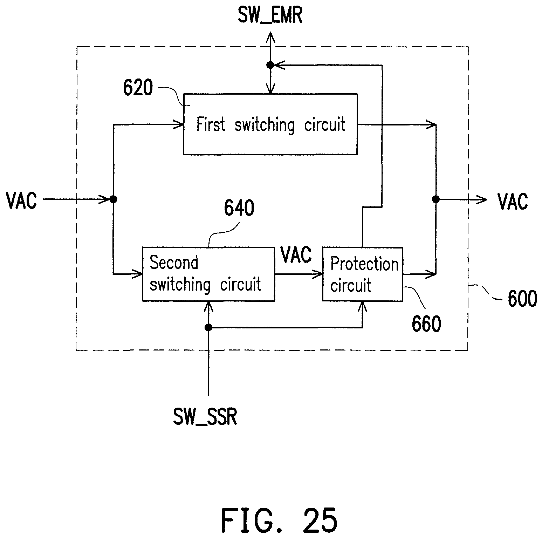

The switching module 600 in the aforesaid embodiments will be described hereafter. Referring to Fig. 5, Fig. 9, Fig. 12, Fig. 15, Fig. 18, Fig. 23 and Fig. 25 simultaneously, Fig. 25 is a schematic circuit block diagram of a switching module 600 in Fig. 5, Fig. 9, Fig. 12, Fig. 15, Fig. 18, and Fig. 23. The switching module 600 includes a first switching circuit 620, a second switching circuit 640, and a protection circuit 660. In an embodiment of the invention, the first switching circuit 620 may include an electromagnetic relay, and the second switching circuit 640 may include a solid state relay, and yet the invention is not limited thereto. In other embodiments of the invention, the first switching circuit 620 may be, for example, a switching circuit which is capable of carrying a higher current load and is less affected by temperature changes, and the second switching circuit 640 may be, for example, a switching circuit with less power consumption and high switching speed.

The first switching circuit 620 is coupled between the controller 400 and the socket 200 so as to receive the AC power VAC of the city power system 800 from the controller 400. The first switching circuit 620 is controlled by a first control signal SW_EMR to transmit the AC power VAC to the socket 200. Wherein the first control signal SW_EMR may be generated by the controller 400 or the protection circuit 660. In other words, the first switching circuit 620 may be controlled by the controller 400 or the protection circuit 660 according to the loading status of the socket 200. More details will be described later on.

The second switching circuit 640 is coupled to the controller 400 so as to receive the AC power VAC from the city power system 800. The protection circuit 660 is coupled between the second switching circuit 640 and the socket 200. As shown in Fig. 25, the second switching circuit 640 and the protection circuit 660 are serially connected, and the second switching circuit 640 and the protection circuit 660 are parallel connected to the first switching circuit 620. Wherein, the second switching circuit 640 is controlled by a second control signal SW_SSR to transmit the AC power VAC through the protection circuit 660 to the socket 200. The protection circuit 660 is controlled by the second control signal SW_SSR to detect the load power of the socket 200 when the second switching circuit 640 is on. Wherein the second control signal SW_SSR is generated by the controller 400. In other words, the controller 400 may simultaneously control to turn on or turn off both the second switching circuit 640 and the protection circuit 660 according to the second control signal SW_SSR.

It is understood that the switching module 600 includes two power transmission channels. One of the power transmission channels receives the AC power VAC from the controller 400 via the first switching circuit 620 and transmits the AC power VAC to the socket 200. The other one of the power transmission channels receives the AC power VAC from the controller 400 via the second switching circuit 640 and the protection circuit 660 and transmits the AC power VAC to the socket 200. That is, the power transmission channels inside the switching module 600 may be set and switched by controlling the on or off of the first switching module 620 and the second switching module 640.

The operation of the switching module 600 will be described in terms of the first embodiment as shown Fig. 3-Fig. 6. The operation of the switching module 600 in other embodiments may be deduced according to the following description. Referring to Figs.3-6 and Fig. 25 together. When the pins 101 of the plug 100 of an appliance (not shown) are not inserted or are not completely inserted into the first slot 210 and the second slot 220 of the socket 200, the first receiver 320 senses the infrared light 700. At this time, the controller 400 generates the first control signal SW_EMR and the second control signal SW_SSR to control the first switching circuit 620 and the second switching circuit 640 to be off so that the AC power VAC from the city power system 800 may not be able to be provided to the socket 200 through the switching module 600.

After the pins 101 of the plug 100 of the appliance are completely inserted into the first slot 210 and the second slot 220 of the socket 200, the first receiver 320 transmits the first sensing result that the infrared light 700 is unable to be sensed to the controller 400. Therefore, the controller 400 may then switch the first switching circuit 620 or the second switching circuit 640 in the switching module 600 to be on so that the AC power VAC from the city power system 800 is able to be transmitted to the socket 200 through one of the power transmission channels of the switching module 600, and thereby providing the required load power to the plug 100 (i.e. the appliance).

Furthermore, the controller 400 may also detect the power requirement of the appliance on the socket 200 and the load power of the appliance. The controller 400 may switch the first switching circuit 620 and the second switching circuit 640 of the switching module 600 according to the detected load power of the socket 200.

In general, when the electromagnetic relay of the first switching circuit 620 is under-loaded, its power consumption is relatively higher than that of the solid state relay of the second switching circuit 640. The electromagnetic relay of the first switching circuit 620 even continues consuming power while it is standing by (i.e. not loaded). On the other hand, the power consumption of the solid state relay of the second switching circuit 640 is proportional to the load current. Hence, while the solid state relay is standing by (i.e. not loaded, the load current is approximately 0A) or under-loaded (e.g. the load current is less than 0.5 A), it possesses a characteristics of zero power consumption or low power consumption and thus is able to effectively reduce electricity consumption. The solid state relay also has a higher switching speed.

Under the aforesaid condition, when the load power of the socket 200 is less than a power-saving threshold TH2, the controller 400 turns on the second switching circuit 640 and the protection circuit 660 and turns off the first switching circuit 620 so as to make the sparkless socket 1000 operate in a low power mode. Conversely, when the load power of the socket 200 is continuously greater than the power-saving threshold TH2 for a predetermined time period, the controller 400 turns on the first switching circuit 620 and turns off the second switching circuit 640 and protection circuit 660 so as to make the sparkless socket 1000 operate in a high power mode. The aforesaid power-saving threshold TH2 may be set according to actual applications or design requirements.

In general, after the user finishes using the appliance, he/she would often only turn off the appliance instead of unplugging the plug 100 of the appliance from the socket 200. Since the pins 101 of the plug 100 are still completely inserted in the first slot 210 and the second slot 220 of the socket 200, the infrared light 700 guided by the first light guide pillar 510 does not reach the first receiver 320. Hence, the controller 400 keeps the switching module 600 enabled. In other words, the AC power VAC from the city power system 800 is continuously provided to the socket 200. At this time, since the switch of the appliance inserted in the socket 200 (i.e. the load) is off, the load power of the socket 200 detected by the controller 400 should be 0W. After the controller 400 determines that the load power of the socket 200 is continuously less than the power-saving threshold TH2 for a predetermined time period, the controller 400 turns on the second switching circuit 640 and the protection circuit 660 and turns off the first switching circuit 620 so as to make the sparkless socket 1000 operate in a low power mode.

Under such condition, if the appliance inserted in the socket 200 is a high power appliance (e.g. air conditioner, oven, or hair dryer), when the user turns on the appliance, an extreme current would instantaneously flow from the city power system 800, through the controller 400 and the switching module 600, and to the appliance coupled to the socket 200. Since the sparkless socket 1000 operates under the low power mode (i.e. the second switching circuit 640 is on and the first switching circuit 620 is off), if the extreme current exceeds a rated current of the solid state relay of the second switching circuit 640 (i.e. the second switching circuit 640 is over-loaded), the solid state relay of the second switching circuit 640 may be damaged. Besides, when the second switching circuit 640 is over-loaded, the controller 400 mostly may not be able to switch the switching module 600 instantly (e.g. within milliseconds). As a result, the risk of damaging the solid state relay of the second switching circuit 640 may be greatly increased. In order to avoid such scenario, the protection circuit 660 may perform overload protection on the second switching circuit 640.

To be specific, when the protection circuit 660 detects that the load power of the socket 200 is greater than an overload threshold TH1, it may generate the first control signal SW_EMR instantly (e.g. in milliseconds) to turn on the first switching circuit 620. Since the second switching circuit 640 is parallel connected to the first switching circuit 620 and the first switching circuit 620 is capable of carrying a higher current load, the first switching circuit 620 may divide overload currents when the second switching circuit 640 is over-loaded (i.e. the overload power is greater than the overload threshold TH1) so as to perform overload protection on the second switching circuit 640. The aforesaid overload threshold TH1 may be set according to actual applications or design requirements, where the power-saving threshold TH2 is normally less than the overload threshold TH1.

Moreover, the protection circuit 660 may provide notification for the controller 400 through the first control signal SW_EMR. When the controller 400 determines that the first switching circuit 620 is turned on by the protection circuit 660 according to the first control signal SW_EMR, the controller 400 generates the second control signal SW_SSR to turn off the second switching circuit 640 and the protection circuit 660 and controls the first switching circuit 620 to remain being on. Regarding the detailed implementation of the first switching circuit 620, the second switching circuit 640, and the protection circuit 660 may refer to U.S. Patent application Ser. No. 14/640,024, titled "POWER TRANSMISSION APPARATUS WITH OVER-LOADING PROTECTION AND POWER-SAVING MECHANISM".

In summary, the sparkless socket of the embodiments of the invention, before a plug of an appliance being completely inserted into the socket, allows the controller to disable the switching module because the infrared light emitted by the emitter may pass through the through holes and reach the receiver or the another end of the pressing stick is not in contact with the mechanical switch. In contrast, after the plug of the appliance is completely inserted into the socket, the through holes are covered by the plug so that the infrared light emitted by the emitter is blocked and unable to be transmitted to the receiver and the protrusion part is controlled by the plug to make the another end of the pressing stick press the mechanical switch. At this time, the controller is able to switch the switching module to be enabled, so as to provide AC power to the socket. As a result, sparks are prevented from being generated at the moment when the pins of the plug are being in contact with or being pulled out from the socket, so as to enhance the electricity safety.

In conclusion, a sparkless socket including a socket, a sensing module, a controller, a switching module, a pressing stick and a mechanical switch are provided. The sensing module includes an emitter and a receiver. The receiver receives an infrared light emitted by the emitter through a light guide element module and holes on slots of the socket and generates a sensing result accordingly. The pressing stick is pressed by a plug if the plug is plugged into the socket. The mechanical switch is controlled by the pressing stick to generate a first signal. The switching module is controlled by the controller to transmit an AC power provided by a city power system from the controller to the socket. The controller determines whether the plug is plugged into the socket according to the sensing result and the first signal and thereby enables or disables the switching module.

## Claims

1. A sparkless socket (1000', 2000') configured to be in contact with a pair of pins (101) of a plug (100) being inserted in the socket, comprising:
a socket (200, 200'), wherein a first slot (210) and a second slot (220) are configured in the socket (200, 200'), each slot (210,220) having slot walls, wherein a through hole (230) is configured on each of the slot walls of each of the first slot (210) and the second slot (220), and the through holes (230) face each other;
a sensing module (300), comprising:
an emitter (310), configured to emit infrared light (700);
a first receiver (320), configured to receive the infrared light (700) via a light guide element module (500) and the through holes (230) of the first slot (210), so as to generate a first sensing result accordingly; and
a second receiver (330), configured to receive the infrared light (700) via the light guide element module (500) and the through holes (230) of the second slot (220), so as to generate a second sensing result accordingly;
a controller (420, 430), coupled to the sensing module (300) so as to receive the sensing result (SR), and connected to a city power system (800); and
a switching module (600), coupled between the socket (200, 200') and the controller (420, 430) to receive an alternating-current (AC) power (VAC) provided by the city power system (800) from the controller (420, 430), and controlled by the controller (420, 430) to transmit the AC power (VAC) to the socket (200, 200'), wherein when the controller (420, 430) determines that none of the frst receiver (320) and the second receiver (330) receives the infrared light (700) according to the first sensing result and the second sensing result, the controller (420, 430) enables the switching module (600), and otherwise, the controller (420, 430) disables the switching module (600).

2. The sparkless socket (2000') as recited in claim 1, wherein the socket (200') further comprises a front wall (290), the front wall (290) has an aperture (295), and the aperture (295) is located between the first slot (210) and the second slot (220), wherein the sparkless socket (2000') further comprises:
a pressing stick (920), disposed in an inner space of the socket (200'), an end of the pressing stick (920) protrudes from the socket (200') via the aperture (295) of the front wall (290) so as to form a protrusion part (925); and
a mechanical switch (940), wherein the mechanical switch (940) has a control terminal (945), the control terminal (945) of the mechanical switch (940) faces another end of the pressing stick (920), the mechanical switch (940) is controlled by the pressing stick (920) to generate a first signal (S1) in response to a pressing action of the pressing stick (920),
wherein the controller (430) is further coupled to the mechanical switch (940) to receive the first signal (S1), when the controller (430) determines that none of the first receiver (320) and the second receiver (330) receives the infrared light (700) according to the first sensing result (SR) and the second sensing result (SR) and determines that the another end of the pressing stick (920) presses the control terminal (945) of the mechanical switch (940) according to the first signal (S1), the controller (430) enables the switching module (600), and otherwise, the controller (430) disables the switching module (600).

3. The sparkless socket (2000') as recited in claim 2, wherein:
when the plug (100) does not touch the protrusion part (925), the another end of the pressing stick (920) is not in contact with the control terminal (945) of the mechanical switch (940); and
after the pair of pins (101) of the plug (100) are completely inserted into the first slot (210) and the second slot (220) of the socket (200'), the plug (100) presses the protrusion part (925) to cause the another end of the pressing stick (920) to press the control terminal (945) of the mechanical switch (940).

4. The sparkless socket (1000', 2000') as recited in any one of the preceding claims, wherein the emitter (310) is disposed between the first receiver (320) and the second receiver (330), and the light guide element module (500) comprises:
a first light guide pillar (510), disposed among the first slot (210), the second slot (220), and the emitter (310), and configured to guide the infrared light (700) emitted by the emitter (310), wherein an entrance (510_1) of the first light guide pillar (510) faces the emitter (310) to receive the infrared light (700) emitted by the emitter (310), an exit (510_2) of the first light guide pillar (510) faces the through hole (230) of the first slot (210), and another exit (510_3) of the first light guide pillar (510) faces the through hole (230) of the second slot (220);
a second light guide pillar (520), disposed between the first slot (210) and the first receiver (320), wherein an entrance (520_1) of the second light guide pillar (520) faces the through hole (230) of the first slot (210), and an exit (520_2) of the second light guide pillar (520) faces the first receiver (320); and
a third light guide pillar (530), disposed between the second slot (220) and the second receiver (330), wherein an entrance (530_1) of the third light guide pillar (530) faces the through hole (230) of the second slot (220), and an exit (530_2) of the third light guide pillar (530) faces the second receiver (330).

5. The sparkless socket (1000', 2000') as recited in claim 4, wherein:
when the pair of pins (101) of the plug (100) is not inserted or not completely inserted into the first slot (210) and the second slot (220), the infrared light (700) emitted by the emitter (310) is transmitted to the first receiver (320) via the first light guide pillar (510), the through hole (230) of the first slot (210), and the second light guide pillar (520) sequentially, and the infrared light (700) emitted by the emitter (310) is transmitted to the second receiver (330) via the first light guide pillar (S10), the through hole (230) of the second slot (220), and the third light guide pillar (530) sequentially; and
after the pair of pins (101) of the plug (100) is completely inserted into the first slot (210) and the second slot (220), the pair of pins (101) of the plug (100) covers the through hole (230) of the first slot (210) and the through hole (230) of the second slot (220) to block the infrared light (700) guided by the first light guide pillar (510).

6. The sparkless socket as recited in any one of the preceding claims, wherein the switching module (600) comprises:
a first switching circuit (620), coupled between the controller (420, 430) and the socket (200, 200') to receive the AC power (VAC) from the controller (420, 430), and controlled by a first control signal (SW_EMR) to transmit the AC power (VAC) to the socket (200, 200');
a second switching circuit (640), coupled to the controller (420, 430) to receive the AC power (VAC); and
a protection circuit (660), coupled between the second switching circuit (640) and the socket (200, 200'),
wherein the second switching circuit (640) is controlled by a second control signal (SW_SSR) and transmits the AC power (VAC) through the protection circuit (660) to the socket (200, 200'),
wherein the protection circuit (660) is controlled by the second control signal (SW_SSR) to detect a load power of the socket (200, 200') while the second switching circuit (640) is on, when an instantaneous variation of the load power is greater than an overload threshold, the protection circuit (660) generates the first control signal (SW_EMR) to turn on the first switching circuit (620) so as to protect the second switching circuit (640) which is on,
wherein the controller (420, 430) receives the first control signal (SW_EMR), and after the controller (420, 430) determines that the first switching circuit (620) is turned on by the protection circuit (660) according to the first control signal (SW_EMR), the controller (420, 430) generates the first control signal (SW_EMR) to keep the first switching circuit (620) at an on state, and the controller (420, 430) generates the second control signal (SW_SSR) to turn off the second switching circuit (640) and the protection circuit (660).

7. A sparkless socket (1000", 2000"), configured to be in contact with three pins (101) of a plug (100) being inserted in the socket, comprising:
a socket (200, 200"), wherein a first slot (210), a second slot (220), and a third slot (240) at a different direction from the first slot (210) and the second slot (220) are configured in the socket (200, 200"), each slot (210, 220, 240) having two slot walls, wherein a through hole (230) is configured on each of the slot walls of each of the first slot (210), the second slot (220), and the third slot (240);
a sensing module (300), comprising:
a light guide element module (500), comprising a first light guide pillar (510), a second light guide pillar (520), a third light guide pillar (530) and a fourth light guide pillar (540);
an emitter (310), configured to emit infrared light (700) into the first light guide pillar (510);
a first receiver (320), configured to receive the infrared light (700) via the first light guide pillar (510), the through hole (230) of the first slot (210) and the second light guide pillar (520), so as to generate a first sensing result accordingly;
a second receiver (330), configured to receive the infrared light (700) via the first light guide pillar (510), the through hole (230) of the second slot (220) and the third light guide pillar (530), so as to generate a second sensing result accordingly; and
a third receiver (340), configured to receive the infrared light (700) via the first light guide pillar (510), the through hole (230) of the third slot (240) and the fourth light guide pillar (540), so as to generate a third sensing result accordingly;
a controller (440, 450), coupled to the sensing module (300) to receive the first sensing result, the second sensing result, and the third sensing result, and connected to a city power system (800); and
a switching module (600), coupled between the socket (200, 200") and the controller (440, 450) to receive an alternating-current (AC) power (VAC) provided by the city power system (800) from the controller (440, 450), and controlled by the controller (440, 450) to transmit the AC power (VAC) to the socket (200, 200"),
wherein when the controller (440, 450) determines that none of the first receiver (320), the second receiver (330), and the third receiver (340) receives the infrared light (700) according to the first sensing result, the second sensing result, and the third sensing result, the controller (440, 450) enables the switching module (600), and otherwise, the controller (440, 450) disables the switching

8. The sparkless socket (2000") as recited in claim 7, wherein the socket (200") further comprises a front wall (290), the front wall (290) has an aperture (295), the aperture (295) is located among the first slot (210), the second slot (220), and the third slot (240), wherein the sparkless socket (2000") further comprises:
a pressing stick (920), disposed in an inner space of the socket (200"), an end of the pressing stick (920) protrudes from the socket (200") via the aperture (295) of the front wall (290) so as to form a protrusion part (925); and
a mechanical switch (940), wherein the mechanical switch (940) has a control terminal (945), the control terminal (945) of the mechanical switch (940) faces another end of the pressing stick (920), the mechanical switch (940) is controlled by the pressing stick (920) to generate a first signal (S1) in response to a pressing action of the pressing stick (920),
wherein the controller (450) is further coupled to the mechanical switch (940) to receive the first signal (S1), when the controller (450) determines that none of the first receiver (320), the second receiver (330), and the third receiver (340) receives the infrared light (700) according to the first sensing result (SR), the second sensing result (SR), and the third sensing result (SR) and determines that the another end of the pressing stick (920) presses the control terminal (945) of the mechanical switch (940) according to the first signal (S1), the controller (450) enables the switching module (600), and otherwise, the controller (450) disables the switching module (600).

9. The sparkless socket (2000") as recited in claim 8, wherein:
when the plug (100) does not touch the protrusion part (925), the another end of the pressing stick (920) is not in contact with the control terminal (945) of the mechanical switch (940); and
after the pins (101) of the plug (100) are completely inserted into the first slot (210), the second slot (220), and the third slot (240) of the socket (200"), the plug (100) presses the protrusion part (925) to cause the another end of the pressing stick (920) to press the control terminal (945) of the mechanical switch (940).

10. The sparkless socket (1000", 2000") as recited in any one of the claims 7-9, wherein the first light guide pillar (510) is disposed among the first slot (210), the second slot (220), the third slot (240), and the emitter (310), and configured to guide the infrared light (700) emitted by the emitter (310), wherein an entrance (514_1) of the first light guide pillar (510) faces the emitter (310) to receive the infrared light (700) emitted by the emitter (310), and three exits (511_1, 512_1, 513_1) of the first light guide pillar (510) faces the through hole (230) of the first slot (210), the through hole (230) of the second slot (220), and the through hole (230) of the third slot (240) respectively;
the second light guide pillar (520) is disposed between the first slot (210) and the first receiver (320), wherein an entrance (520_1) of the second light guide pillar (520) faces the through hole (230) of the first slot (210), and an exit (520_2) of the second light guide pillar (520) faces the first receiver (320);
the third light guide pillar (530) is disposed between the second slot (220) and the second receiver (330), wherein an entrance (530_1) of the third light guide pillar (530) faces the through hole (230) of the second slot (220), and an exit (530_2) of the third light guide pillar (530) faces the second receiver (330); and
the fourth light guide pillar (540) is disposed between the third slot (240) and the third receiver (340), wherein an entrance (540_1) of the fourth light guide pillar (540) faces the through hole (230) of the third slot (240), and an exit (540_2) of the fourth light guide pillar (540) faces the third receiver (340).

11. The sparkless socket (1000", 2000") as recited in claim 10, wherein:
the first light guide pillar (510) comprises a first pin (511), a second pin (512), a third pin (513), and a fourth pin (514) connected with each other, and the first pin (511), the second pin (512), the third pin (513), and the fourth pin (514) form a three-dimensional double T-shaped structure,
wherein the first pin (511), the second pin (512), and the third pin (513) are connected with each other to form a T-shaped structure, wherein the first pin (511), the second pin (512), and the fourth pin (514) are connected with each other to form another T-shaped structure, and wherein the third pin (513) and the fourth pin (514) are connected with each other to form an inverted-L structure, and
wherein the entrance (514_1) of the first light guide pillar (510) is disposed at the fourth pin (514), and the three exits (511_1, 512_1, 513_1) of the first light guide pillar (510) are respectively disposed at the first pin (511), the second pin (512), and the third pin (513).

12. The sparkless socket (1000", 2000") as recited in claim 10 or 11, wherein:
when the three pins (101) of the plug (100) are not inserted or not completely inserted into the first slot (210), the second slot (220), and the third slot (240) of the socket (200, 200"), the infrared light (700) emitted by the emitter (310) is transmitted to the first receiver (320) via the first light guide pillar (510), the through hole (230) of the first slot (210), and the second light guide pillar (520) sequentially, the infrared light (700) emitted by the emitter (310) is transmitted to the second receiver (330) via the first light guide pillar (510), the through hole (230) of the second slot (220), and the third light guide pillar (530) sequentially, and the infrared light (700) emitted by the emitter (310) is transmitted to the third receiver (340) via the first light guide pillar (510), the through hole (230) of the third slot (240), and the fourth light guide pillar (540) sequentially; and
after the three pins (101) of the plug (100) are completely inserted into the first slot (210), the second slot (220), and the third slot (240) of the socket (200, 200"), the three pins (101) of the plug (100) cover the through hole (230) of the first slot (210), the through hole (230) of the second slot (220), and the through hole (230) of the third slot (240) to block the infrared light (700) guided by the first light guide pillar (510).

13. The sparkless socket (1000", 2000") as recited in any one of the claims 7-12, wherein the switching module (600) comprises:
a first switching circuit (620), coupled between the controller (440, 450) and the socket (200, 200") to receive the AC power (VAC) from the controller (440, 450), and controlled by a first control signal (SW_EMR) to transmit the AC power (VAC) to the socket (200, 200");
a second switching circuit (640), coupled to the controller (440, 450) to receive the AC power (VAC); and
a protection circuit (660), coupled between the second switching circuit (640) and the socket (200, 200"),
wherein the second switching circuit (640) is controlled by a second control signal (SW_SSR) and transmits the AC power (VAC) through the protection circuit (660) to the socket (200, 200"),
wherein the protection circuit (660) is controlled by the second control signal (SW_SSR) to detect a load power of the socket (200, 200") while the second switching circuit (640) is on, when an instantaneous variation of the load power is greater than an overload threshold, the protection circuit (660) generates the first control signal (SW_EMR) to turn on the first switching circuit (620) so as to protect the second switching circuit (640) which is on,
wherein the controller (440, 450) receives the first control signal (SW_EMR), and after the controller (440, 450) determines that the first switching circuit (620) is turned on by the protection circuit (660) according to the first control signal (SW_EMR), the controller (440, 450) generates the first control signal (SW_EMR) to keep the first switching circuit (620) at an on state, and the controller (440, 450) generates the second control signal (SW_SSR) to turn off the second switching circuit (640) and the protection circuit (660).

## Patentansprüche

1. Funkenlose Steckdose (1000', 2000'), die konfiguriert ist, um mit einem Paar von Stiften (101) eines Steckers (100) in Kontakt zu stehen, der in die Steckdose eingesetzt ist, umfassend:
eine Steckdose (200, 200'), wobei ein erster Schlitz (210) und ein zweiter Schlitz (220) in der Steckdose (200, 200') ausgebildet sind, wobei jeder Schlitz (210, 220) Schlitzwände aufweist, wobei ein Durchgangsloch (230) an jeder der Schlitzwände jedes des ersten Schlitzes (210) und des zweiten Schlitzes (220) angeordnet ist und die Durchgangslöcher (230) einander gegenüberliegen;
ein Sensormodul (300), umfassend:
einen Sender (310), der konfiguriert ist, Infrarotlicht (700) auszustrahlen;
einen ersten Empfänger (320), der konfiguriert ist, das Infrarotlicht (700) über ein Lichtleiterelementmodul (500) und die Durchgangslöcher (230) des ersten Schlitzes (210) zu empfangen, um entsprechend ein erstes Detektionsergebnis zu erzeugen; und
einen zweiten Empfänger (330), der konfiguriert ist, das Infrarotlicht (700) über das Lichtleiterelementmodul (500) und die Durchgangslöcher (230) des zweiten Schlitzes (220) zu empfangen, um entsprechend ein zweites Detektionsergebnis zu erzeugen;
eine Steuerung (420,430), die mit dem Sensormodul (300) gekoppelt ist, um das Sensorergebnis (SR) zu empfangen, und die mit einem öffentlichen Stromnetz (800) verbunden ist; und
ein Schaltmodul (600), das zwischen der Steckdose (200, 200') und der Steuerung (420, 430) gekoppelt ist, um eine Wechselstrom (AC)-Leistung (VAC) zu empfangen, die von dem öffentlichen Stromversorgungssystem (800) von der Steuerung (420, 430) bereitgestellt und von der Steuerung (420, 430) gesteuert wird, um die AC-Leistung (VAC) an die Steckdose (200, 200') zu übertragen,
wobei, wenn die Steuerung (420, 430) feststellt, dass keiner des ersten Empfängers (320) und des zweiten Empfängers (330) das Infrarotlicht (700) gemäß dem ersten Detektionsergebnis und dem zweiten Detektionsergebnis empfängt, die Steuerung (420, 430) das Schaltmodul (600) aktiviert und ansonsten die Steuerung (420, 430) das Schaltmodul (600) deaktiviert.

2. Funkenlose Steckdose (2000') nach Anspruch 1, wobei die Steckdose (200') ferner eine Vorderwand (290) aufweist, wobei die Vorderwand (290) eine Öffnung (295) aufweist und die Öffnung (295) zwischen dem ersten Schlitz (210) und dem zweiten Schlitz (220) angeordnet ist, wobei die funkenlose Steckdose (2000') ferner umfasst:
einen Druckstab (920), der in einem Innenraum der Steckdose (200') angeordnet ist, wobei ein Ende des Druckstabes (920) aus der Steckdose (200') über die Öffnung (295) der Vorderwand (290) herausragt, um ein vorstehendes Teil (925) zu bilden; und
ein mechanischer Schalter (940), wobei der mechanische Schalter (940) einen Steueranschluss (945) aufweist, wobei der Steueranschluss (945) des mechanischen Schalters (940) einem anderen Ende des Druckstabes (920) zugewandt ist, wobei der mechanische Schalter (940) durch den Druckstab (920) gesteuert wird, um ein erstes Signal (S1) als Reaktion auf eine Druckwirkung des Druckstabes (920) zu erzeugen,
wobei die Steuerung (430) ferner mit dem mechanischen Schalter (940) gekoppelt ist, um das erste Signal (S1) zu empfangen, wenn die Steuerung (430) feststellt, dass keiner der ersten Empfänger (320) und der zweite Empfänger (330) das Infrarotlicht (700) gemäß dem ersten Detektionsergebnis (SR) und dem zweiten Detektionsergebnis (SR) empfängt, und feststellt, dass das andere Ende des Druckstabs (920) den Steueranschluss (945) des mechanischen Schalters (945) gemäß dem ersten Signal (S1) drückt, die Steuerung (430) das Schaltmodul (600) aktiviert, und andernfalls die Steuerung (430) das Schaltmodul (600) deaktiviert.

3. Funkenlose Steckdose (2000') nach Anspruch 2, wobei:
wenn der Stecker (100) das vorstehende Teil (925) nicht berührt, das andere Ende des Druckstabs (920) nicht mit dem Steueranschluss (945) des mechanischen Schalters (940) in Berührung kommt; und
nachdem das Stiftpaar (101) des Steckers (100) vollständig in den ersten Schlitz (210) und den zweiten Schlitz (220) der Steckdose (200') eingeführt ist, der Stecker (100) das Vorstehende Teil (925) drückt, um das andere Ende des Druckstabs (920) dazu zu veranlassen, den Steueranschluss (945) des mechanischen Schalters (940) zu drücken.

4. Funkenlose Steckdose (1000', 2000') nach einem der vorangegangenen Ansprüche, wobei der Sender (310) zwischen dem ersten Empfänger (320) und dem zweiten Empfänger (330) angeordnet ist und das Lichtleiterelementmodul (500) umfasst:
eine erste Lichtleitersäule (510), die zwischen dem ersten Schlitz (210), dem zweiten Schlitz (220) und dem Sender (310) angeordnet ist und so konfiguriert ist, dass sie das von dem Sender (310) emittierte Infrarotlicht (700) leitet, wobei ein Eingang (510_1) der ersten Lichtleitersäule (510) dem Sender (310) zugewandt ist, um das von dem Sender (310) emittierte Infrarotlicht (700) zu empfangen, wobei ein Ausgang (510_2) der ersten Lichtleitersäule (510) dem Durchgangsloch (230) des ersten Schlitzes (210) zugewandt ist und wobei ein anderer Ausgang (510_3) der ersten Lichtleitersäule (510) dem Durchgangsloch (230) des zweiten Schlitzes (220) zugewandt ist;
eine zweite Lichtleitersäule (520), die zwischen dem ersten Schlitz (210) und dem ersten Empfänger (320) angeordnet ist, wobei ein Eingang (520_1) der zweiten Lichtleitersäule (520) dem Durchgangsloch (230) des ersten Schlitzes (210) zugewandt ist und ein Ausgang (520_2) der zweiten Lichtleitersäule (520) dem ersten Empfänger (320) zugewandt ist; und
eine dritte Lichtleitersäule (530), die zwischen dem zweiten Schlitz (220) und dem zweiten Empfänger (330) angeordnet ist, wobei ein Eingang (530_1) der dritten Lichtleitersäule (530) dem Durchgangsloch (230) des zweiten Schlitzes (220) zugewandt ist und ein Ausgang (530_2) der dritten Lichtleitersäule (530) dem zweiten Empfänger (330) zugewandt ist.

5. Funkenlose Steckdose (1000', 2000') nach Anspruch 4, wobei:
wenn das Stiftpaar (101) des Steckers (100) nicht oder nicht vollständig in den ersten Schlitz (210) und den zweiten Schlitz (220) eingeführt ist, das von dem Sender (310) emittierte Infrarotlicht (700) über die erste Lichtleitersäule (510), das Durchgangsloch (230) des ersten Schlitzes (210) und die zweite Lichtleitersäule (520) sequentiell auf den ersten Empfänger (320) übertragen wird, und das von dem Sender (310) emittierte Infrarotlicht (700) über die erste Lichtleitersäule (510), das Durchgangsloch (230) des zweiten Schlitzes (220) und die dritte Lichtleitersäule (530) sequentiell auf den zweiten Empfänger (330) übertragen wird; und
nachdem das Stiftpaar (101) des Steckers (100) vollständig in den ersten Schlitz (210) und den zweiten Schlitz (220) eingeführt ist, das Stiftpaar (101) des Steckers (100) das Durchgangsloch (230) des ersten Schlitzes (210) und das Durchgangsloch (230) des zweiten Schlitzes (220) abdeckt, um das von der ersten Lichtleitersäule (510) geführte Infrarotlicht (700) zu blockieren.

6. Funkenlose Steckdose nach einem der vorstehenden Ansprüche, wobei das Schaltmodul (600) umfasst:
einen ersten Schaltkreis (620), der zwischen der Steuerung (420, 430) und der Steckdose (200, 200') gekoppelt ist, um die AC-Leistung (VAC) von der Steuerung (420, 430) zu empfangen, und der durch ein erstes Steuersignal (SW_EMR) gesteuert wird, um die AC-Leistung (VAC) an die Steckdose (200, 200') zu übertragen;
einen zweiten Schaltkreis (640), der mit dem Steuerung (420, 430) gekoppelt ist, um die AC-Leistung (VAC) zu empfangen; und
eine Schutzschaltung (660), die zwischen dem zweiten Schaltkreis (640) und der Steckdose (200, 200') gekoppelt ist,
wobei der zweite Schaltkreis (640) durch ein zweites Steuersignal (SW_SSR) gesteuert wird und die AC-Leistung (VAC) über die Schutzschaltung (660) an die Steckdose (200, 200') überträgt,
wobei die Schutzschaltung (660) durch das zweite Steuersignal (SW_SSR) gesteuert wird, um eine Lastleistung der Steckdose (200, 200') zu erfassen, während der zweite Schaltkreis (640) eingeschaltet ist, wobei, wenn eine augenblickliche Änderung der Lastleistung größer als eine Überlastschwelle ist, erzeugt die Schutzschaltung (660) das erste Steuersignal (SW_EMR), um den erste Schaltkreis (620) einzuschalten, um somit den zweiten eingeschalteten Schaltkreis (640) zu schützen,
wobei die Steuerung (420, 430) das erste Steuersignal (SW_EMR) empfängt und nachdem die Steuerung (420, 430) bestimmt, dass der erste Schaltkreis (620) durch die Schutzschaltung (660) entsprechend dem ersten Steuersignal (SW_EMR) eingeschaltet ist, die Steuerung (420, 430) das erste Steuersignal (SW_EMR) erzeugt, um den ersten Schaltkreis (620) in einem eingeschalteten Zustand zu halten, und die Steuerung (620) das zweite Steuersignal (SW_SSR) erzeugt, um den zweiten Schaltkreis (640) und die Schutzschaltung (660) abzuschalten.

7. Funkenlose Steckdose (1000", 2000"), die konfiguriert, mit drei Stiften (101) eines Steckers (100), der in die Steckdose eingeführt ist, in Kontakt zu sein, umfassend:
eine Steckdose (200, 200"), wobei ein erster Schlitz (210), ein zweiter Schlitz (220) und ein dritter Schlitz (240), an einer anderen Richtung von dem ersten Schlitz (210) und dem zweiten Schlitz (220), in der Steckdose (200, 200") ausgebildet sind, wobei jeder Schlitz (210, 220, 240) zwei Schlitzwände aufweist, wobei ein Durchgangsloch (230) an jeder der Schlitzwände jedes des ersten Schlitzes (210), des zweiten Schlitzes (220) und des dritten Schlitzes (240) angeordnet ist;
ein Sensormodul (300), umfassend:
ein Lichtleiterelementmodul (500) umfassend eine erste Lichtleitersäule (510), eine zweite Lichtleitersäule (520), eine dritte Lichtleitersäule (530) und eine vierte Lichtleitersäule (540);
einen Sender (310), der konfiguriert ist, Infrarotlicht (700) in die erste Lichtleitersäule (510) auszustrahlen;
einen ersten Empfänger (320), der konfiguriert ist, das Infrarotlicht (700) über die erste Lichtleitersäule (510), das Durchgangsloch (230) des ersten Schlitzes (210) und die zweite Lichtleitersäule (520) zu empfangen, um somit ein entsprechendes erstes Detektionsergebnis zu erzeugen;
einen zweiten Empfänger (330), der konfiguriert ist, das Infrarotlicht (700) über die erste Lichtleitersäule (510), das Durchgangsloch (230) des zweiten Schlitzes (220) und die dritte Lichtleitersäule (530) zu empfangen, um somit ein entsprechendes zweites Detektionsergebnis zu erzeugen;
einen dritten Empfänger (340), der konfiguriert ist, das Infrarotlicht (700) über die erste Lichtleitersäule (510), das Durchgangsloch (230) des dritten Schlitzes (240) und die vierte Lichtleitersäule (540) zu empfangen, um somit ein entsprechendes drittes Detektionsergebnis zu erzeugen;
eine Steuerung (440, 450), die mit dem Sensormodul (300) gekoppelt ist, um das erste Sensorergebnis, das zweite Sensorergebnis und das dritte Sensorergebnis zu empfangen, und die mit einem öffentlichen Stromnetz (800) verbunden ist; und
ein Schaltmodul (600), das zwischen der Steckdose (200, 200") und der Steuerung (440, 450) gekoppelt ist, um eine Wechselstrom (AC)-Leistung (VAC) zu empfangen, die von dem öffentlichen Stromversorgungssystem (800) von der Steuerung (420, 430) bereitgestellt und von der Steuerung (420, 430) gesteuert wird, um die AC-Leistung (VAC) an die Steckdose (200, 200") zu übertragen,
wobei, wenn die Steuerung (440, 450) feststellt, dass keiner des ersten Empfängers (320), des zweiten Empfängers (330) und des dritten Empfängers (340) das Infrarotlicht (700) gemäß dem ersten Detektionsergebnis, dem zweiten Detektionsergebnis und dem dritten Detektionsergebnis empfängt, die Steuerung (440, 450) das Schaltmodul (600) aktiviert und ansonsten die Steuerung (440, 450) das Schaltmodul (600) deaktiviert.

8. Funkenlose Steckdose (2000") nach Anspruch 7, wobei die Steckdose (200") ferner eine Vorderwand (290) aufweist, die Vorderwand (290) eine Öffnung (295) aufweist und die Öffnung (295) zwischen dem ersten Schlitz (210), dem zweite Schlitz (220) und dem dritten Schlitz (240) angeordnet ist, wobei die funkenlose Steckdose (2000") ferner umfasst:
einen Druckstab (920), der in einem Innenraum der Steckdose (200") angeordnet ist, wobei ein Ende des Druckstabes (920) aus der Steckdose (200") über die Öffnung (295) der Vorderwand (290) herausragt, um ein vorstehendes Teil (925) zu bilden; und
ein mechanischer Schalter (940), wobei der mechanische Schalter (940) einen Steueranschluss (945) aufweist, wobei der Steueranschluss (945) des mechanischen Schalters (940) einem anderen Ende des Druckstabes (920) zugewandt ist, wobei der mechanische Schalter (940) durch den Druckstab (920) gesteuert wird, um ein erstes Signal (S1) als Reaktion auf eine Druckwirkung des Druckstabes (920) zu erzeugen,
wobei die Steuerung (430) ferner mit dem mechanischen Schalter (940) gekoppelt ist, um das erste Signal (S1) zu empfangen, wenn die Steuerung (430) feststellt, dass keiner des ersten Empfängers (320), des zweiten Empfängers (330) und des dritten Empfängers (340) das Infrarotlicht (700) gemäß dem ersten Detektionsergebnis (SR), dem zweiten Detektionsergebnis (SR) und dem drittem Detektionsergebnis (SR) empfängt, und feststellt, dass das andere Ende des Druckstabs (920) den Steueranschluss (945) des mechanischen Schalters (945) gemäß dem ersten Signal (S1) drückt, die Steuerung (430) das Schaltmodul (600) aktiviert, und andernfalls die Steuerung (430) das Schaltmodul (600) deaktiviert.

9. Funkenlose Steckdose (2000") nach Anspruch 8, wobei:
wenn der Stecker (100) das vorstehende Teil (925) nicht berührt, das andere Ende des Druckstabs (920) nicht mit dem Steueranschluss (945) des mechanischen Schalters (940) in Berührung kommt; und
nachdem das Stiftpaar (101) des Steckers (100) vollständig in den ersten Schlitz (210), den zweiten Schlitz (220) und den dritten Schlitz (240) der Steckdose (200") eingeführt ist, der Stecker (100) das vorstehende Teil (925) drückt, um das andere Ende des Druckstabs (920) dazu zu veranlassen, den Steueranschluss (945) des mechanischen Schalters (940) zu drücken.

10. Funkenlose Steckdose (1000," 2000") nach einem der Ansprüche, wobei 7-9,
wobei die erste Lichtleitersäule (510) zwischen dem ersten Schlitz (210), dem zweiten Schlitz (220), dem dritten Schlitz (240) und dem Sender (310) angeordnet ist und so konfiguriert ist, dass sie das von dem Sender (310) emittierte Infrarotlicht (700) leitet, wobei ein Eingang (514_1) der ersten Lichtleitersäule (510) dem Sender (310) zugewandt ist, um das von dem Sender (310) emittierte Infrarotlicht (700) zu empfangen, und wobei drei Ausgänge (511_1, 512_1, 513_1) der ersten Lichtleitersäule (510) dem Durchgangsloch (230) des ersten Schlitzes (210) bzw. dem Durchgangsloch (230) des zweiten Schlitzes (220) bzw. dem Durchgangsloch (230) des dritten Schlitzes (240) zugewandt ist;
wobei die zweite Lichtleitersäule (520) zwischen dem ersten Schlitz (210) und dem Empfänger (320) angeordnet ist, wobei ein Eingang (520_1) der zweiten Lichtleitersäule (520) dem Durchgangsloch (230) des ersten Schlitzes (210) zugewandt ist, und ein Ausgang (520_2) der zweiten Lichtleitersäule (520) dem ersten Empfänger (320) zugewandt ist;
wobei die dritte Lichtleitersäule (530) zwischen dem zweiten Schlitz (220) und dem zweite Empfänger (330) angeordnet ist, wobei ein Eingang (530_1) der dritten Lichtleitersäule (530) dem Durchgangsloch (230) des zweiten Schlitzes (220) zugewandt ist, und ein Ausgang (530_2) der dritten Lichtleitersäule (530) dem zweiten Empfänger (330) zugewandt ist; und
wobei die vierte Lichtleitersäule (540) zwischen dem dritten Schlitz (240) und dem dritten Empfänger (340) angeordnet ist, wobei ein Eingang (540_1) der vierten Lichtleitersäule (540) dem Durchgangsloch (230) des dritten Schlitzes (230) zugewandt ist, und ein Ausgang (540_2) der vierten Lichtleitersäule (540) dem dritten Empfänger (340) zugewandt ist.

11. Funkenlose Steckdose (1000", 2000") nach Anspruch 10, wobei:
die erste Lichtleitersäule (510) einen ersten Stift (511), einen zweiten Stift (512), einen dritten Stift (513) und einen vierten Stift (514) aufweist, die miteinander verbunden sind, und der erste Stift (511), der zweite Stift (512), der dritte Stift (513) und der vierte Stift (514) eine dreidimensionale doppelte T-förmige Struktur bilden,
wobei der erste Stift (511), der zweite Stift (512) und der dritte Stift (513) jeweils miteinander verbunden sind, um eine T-förmige Struktur zu bilden, wobei der erste Stift (511), der zweite Stift (512) und der vierte Stift (514) miteinander verbunden sind, um eine weitere T-förmige Struktur zu bilden, und wobei der dritte Stift (513) und der vierte Stift (514) miteinander verbunden sind, um eine invertierte L-Struktur zu bilden, und
wobei der Eingang (514_1) der ersten Lichtleitersäule (510) an dem vierten Stift (514) angeordnet ist, und die drei Ausgänge (511_1, 512_1, 513_1) der ersten Lichtleitersäule (510) jeweils an dem ersten Stift (511), dem zweiten Stift (512) bzw. dem dritten Stift (513) angeordnet sind.

12. Funkenlose Steckdose (1000", 2000") nach Anspruch 10 oder 11, wobei:
wenn die drei Stifte (101) des Steckers (100) nicht oder nicht vollständig in den ersten Schlitz (210), den zweiten Schlitz (220) und den dritten Schlitz (240) des Steckers (200, 200") eingeführt sind, so wird das von dem Sender (310) ausgesandte Infrarotlicht (700) über die erste Lichtleitersäule (510), das Durchgangsloch (230) des ersten Schlitzes (210) und die zweite Lichtleitersäule (520) sequentiell an den ersten Empfänger (320) übertragen; so wird das von dem Sender (310) ausgesandte Infrarotlicht (700) über die erste Lichtleitersäule (510), das Durchgangsloch (230) des zweiten Schlitzes (220) und die dritte Lichtleitersäule (530) sequentiell an den zweiten Empfänger (330) übertragen; und so wird das von dem Sender (310) ausgesandte Infrarotlicht (700) über die erste Lichtleitersäule (510), das Durchgangsloch (230) des dritten Schlitzes (240) und die vierte Lichtleitersäule (540) sequentiell an den dritten Empfänger (340) übertragen; und
wobei, nachdem die drei Stifte (101) des Steckers (100) vollständig in den ersten Schlitz (210), den zweiten Schlitz (220) und den dritten Schlitz (240) des Steckers (200, 200") eingeführt sind, die drei Stifte (101) des Steckers (100) das Durchgangsloch (230) des ersten Schlitzes (210), das Durchgangsloch (230) des zweiten Schlitzes (220) und das Durchgangsloch (230) des dritten Schlitzes (230) abdecken, um das von der ersten Lichtleitersäule (510) geführte Infrarotlicht (700) zu blockieren.

13. Funkenlose Steckdose (1000", 2000") nach einem der Ansprüche 7-12, wobei das Schaltmodul (600) umfasst:
einen ersten Schaltkreis (620), der zwischen der Steuerung (440, 450) und der Steckdose (200, 200") gekoppelt ist, um die AC-Leistung (VAC) von der Steuerung (440, 450) zu empfangen, und der durch ein erstes Steuersignal (SW_EMR) gesteuert wird, um die AC-Leistung (VAC) an die Steckdose (200, 200") zu übertragen;
einen zweiten Schaltkreis (640), der mit der Steuerung (440, 450) gekoppelt ist, um die AC-Leistung (VAC) zu empfangen; und
eine Schutzschaltung (660), die zwischen dem zweiten Schaltkreis (640) und der Steckdose (200, 200") gekoppelt ist,
wobei der zweite Schaltkreis (640) durch ein zweites Steuersignal (SW_SSR) gesteuert wird und die AC-Leistung (VAC) über die Schutzschaltung (660) an die Steckdose (200, 200") überträgt,
wobei die Schutzschaltung (660) durch das zweite Steuersignal (SW_SSR) gesteuert wird, um eine Lastleistung der Steckdose (200, 200") zu erfassen, während die zweite Schaltkreis (640) eingeschaltet ist, wobei, wenn eine augenblickliche Änderung der Lastleistung größer als eine Überlastschwelle ist, die Schutzschaltung (660) das erste Steuersignal (SW_EMR) erzeugt, um den ersten Schaltkreis (620) einzuschalten, um somit den eingeschalteten zweiten Schaltkreis zu schützen,
wobei die Steuerung (440, 450) das erste Steuersignal (SW_EMR) empfängt und nachdem die Steuerung (440, 450) bestimmt, dass der erste Schaltkreis (620) von der Schutzschaltung (660) entsprechend dem ersten Steuersignal (SW_EMR) eingeschaltet wird, die Steuerung (440, 450) das erste Steuersignal (SW_EMR) erzeugt, um den ersten Schaltkreis (620) in einem eingeschalteten Zustand zu halten, und die Steuerung (440, 450) das zweite Steuersignal (SW_SSR) erzeugt, um den zweiten Schaltkreis (640) und die Schutzschaltung (660) abzuschalten.

## Revendications

1. Une prise sans étincelle (1000', 2000'), configurée pour insérer une paire de broches (101) d'une fiche (100) insérée dans la prise, comprenant:
une prise (200, 200'), dans laquelle une première fente (210) et une seconde fente (220) est configurée dans la prise (200, 200'), chaque fente (210, 220) ayant des parois de fente, dans laquelle un trou traversant (230) est configuré sur chacune des parois de fente de l'un quelconque d'une première fente (210) et une seconde fente (220), et les trous traversant (230) se faisant face l'un à l'autre ;
un module de détection (300), comprenant:
un émetteur (310), configuré pour émettre de la lumière infrarouge (700);
un premier récepteur (320), configuré pour recevoir la lumière infrarouge (700) via un module de guidage de lumière (500) et les trous traversant (230) de la première fente (210), afin de générer un premier résultat de détection en conséquence ; et
un second récepteur (330), configuré pour recevoir la lumière infrarouge (700) via le module de guidage de lumière (500) et les trous traversant (230) de la seconde fente (220), afin de générer un second résultat de détection en conséquence ;
un contrôleur (420, 430), couplé au module de détection (300) de manière à recevoir le résultat de détection (SR), et connecté à un système d'alimentation électrique urbain (800); et
un module de commutation (600), couplé entre la prise (200, 200') et le contrôleur (420, 430) pour recevoir du contrôleur (420, 430) une alimentation (VAC) en courant alternatif (CA) fournie par le système d'alimentation électrique urbain ( 800) et commandé par le contrôleur (420, 430) pour transmettre l'alimentation (VAC) en courant alternatif (AC) à la prise (200, 200'),
dans lequel lorsque le contrôleur (420, 430) détermine que ni le premier récepteur (320) ni le second récepteur (330) ne reçoit la lumière infrarouge (700) selon le premier résultat de détection et le second résultat de détection, le contrôleur (420, 430) active le module de commutation (600), et dans le cas contraire, le contrôleur (420, 430) désactive le module de commutation (600).

2. La prise sans étincelle (2000') telle que définie dans la revendication 1, dans laquelle la prise (200') comprend en outre une paroi avant (290), la paroi avant (290) ayant une ouverture (295), et l'ouverture (295) étant située entre la première fente (210) et la seconde fente (220), dans lequel la prise sans étincelle (2000') comprend en outre:
une tige de pression (920), disposée dans un espace interne de la prise (200'), une extrémité de la tige de pression (920) dépassant de la prise (200') via l'ouverture (295) de la paroi avant (290) de manière à former une partie en saillie (925); et
un commutateur mécanique (940), dans lequel le commutateur mécanique (940) comporte une borne de commande (945), la borne de commande (945) du commutateur mécanique (940) faisant face à une autre extrémité de la tige de pression (920), le commutateur mécanique (940) étant commandé par la tige de pression (920) de manière à générer un premier signal (S1) en réponse à une pression de la tige de pression (920),
dans lequel le contrôleur (430) est en outre couplé au commutateur mécanique (940) de manière à recevoir le premier signal (S1), lorsque le contrôleur (430) détermine que ni le premier récepteur (320) ni le second récepteur (330) ne reçoit la lumière infrarouge (700) en fonction du premier résultat de détection (SR) et du second résultat de détection (SR) et détermine que l'autre extrémité de la tige de pression (920) fait pression sur la borne de commande (945) de l'interrupteur mécanique (940) en fonction du premier signal (S1), le contrôleur (430) active le module de commutation (600), et dans le cas contraire, le contrôleur (430) désactive le module de commutation (600).

3. La prise sans étincelle (2000') tel que définie dans la revendication 2, dans laquelle :
lorsque la fiche (100) ne touche pas la partie saillante (925), l'autre extrémité de la tige de pression (920) n'est pas en contact avec la borne de commande (945) de l'interrupteur mécanique (940); et
après que la paire de broches (101) de la fiche (100) est complètement insérée dans la première fente (210) et dans la seconde fente (220) de la prise (200'), la fiche (100) appuie sur la partie saillante (925) pour amener l'autre extrémité de la tige de pression (920) à appuyer sur la borne de commande (945) de l'interrupteur mécanique (940).

4. La prise sans étincelle (1000', 2000') telle que définie dans l'une quelconque des revendications précédentes, dans laquelle l'émetteur (310) est disposé entre le premier récepteur (320) et le deuxième récepteur (330), et le module de guidage de lumière (500) comprend:
un premier pilier de guidage de lumière (510), disposé entre la première fente (210), la seconde fente (220) et l'émetteur (310), et configuré pour guider la lumière infrarouge (700) émise par l'émetteur (310), dans lequel une entrée (510_1) du premier pilier de guidage de lumière (510) fait face à l'émetteur (310) pour recevoir la lumière infrarouge (700) émise par l'émetteur (310), une sortie (510_2) du premier pilier de guidage de lumière (510) fait face au trou traversant (230) de la première fente (210), et une autre sortie (510_3) du premier pilier de guidage de lumière (510) fait face au trou traversant (230) du second fente (220);
un deuxième pilier de guidage de lumière (520), disposé entre la première fente (210) et le premier récepteur (320), dans lequel une entrée (520_1) du second pilier de guidage de lumière (520) fait face au trou traversant (230) de la première fente (210), et une sortie (520_2) du second pilier de guidage de lumière (520) fait face au premier récepteur (320); et
un troisième pilier de guidage de lumière (530), disposé entre la seconde fente (220) et le deuxième récepteur (330), dans lequel une entrée (530_1) du troisième pilier de guidage de lumière (530) fait face au trou traversant (230) de la seconde fente (220), et une sortie (530_2) du troisième pilier de guidage de lumière (530) fait face au second récepteur (330).

5. La prise sans étincelle (1000', 2000') telle que définie dans la revendication 4, dans laquelle:
lorsque la paire de broches (101) de la fiche (100) n'est pas insérée ou pas complètement insérée dans la première fente (210) et la seconde fente (220), la lumière infrarouge (700) émise par l'émetteur (310) est transmise séquentiellement au premier récepteur (320) via le premier pilier de guidage de lumière (510), le trou traversant (230) de la première fente (210), et le second pilier de guidage de lumière (520), et la lumière infrarouge (700) émise par l'émetteur (310) est transmise au deuxième récepteur (330) via le premier pilier de guidage de lumière (510), le trou traversant (230) de la seconde fente (220), et le troisième pilier de guidage de lumière (530) de manière séquentielle; et
après que la paire de broches (101) de la fiche (100) est complètement insérée dans la première fente (210) et la seconde fente (220), la paire de broches (101) de la fiche (100) recouvre le trou traversant (230) de la première fente (210) et le trou traversant (230) de la seconde fente (220) pour bloquer la lumière infrarouge (700) guidée par le premier pilier de guidage de lumière (510).

6. La prise sans étincelle telle que définie dans l'une quelconque des revendications précédentes, dans laquelle le module de commutation (600) comporte :
un premier circuit de commutation (620), couplé entre le contrôleur (420, 430) et la prise (200, 200 ') pour recevoir le courant alternatif (VAC) du contrôleur (420, 430), et commandé par un premier signal de commande (SW_EMR) pour transmettre le courant alternatif (VAC) à la prise (200, 200') ;
un deuxième circuit de commutation (640), couplé au contrôleur (420, 430) pour recevoir l'alimentation en courant alternatif (VAC); et
un circuit de protection (660), couplé entre le deuxième circuit de commutation (640) et la prise (200, 200'),
dans laquelle le second circuit de commutation (640) est commandé par un second signal de commande (SW_SSR) et transmet l'alimentation AC (VAC) via le circuit de protection (660) à la prise (200, 200'),
dans lequel le circuit de protection (660) est commandé par le second signal de commande (SW_SSR) pour détecter une puissance de charge de la prise (200, 200') lorsque le deuxième circuit de commutation (640) est activé, lorsqu'une variation instantanée de la puissance de charge est supérieure à un seuil de surcharge, le circuit de protection (660) génère le premier signal de commande (SW_EMR) pour activer le premier circuit de commutation (620) de manière à protéger le second circuit de commutation (640) qui est activé,
dans lequel le contrôleur (420, 430) reçoit le premier signal de commande (SW_EMR), et lorsque le contrôleur (400, 410, 420, 430) détermine que le premier circuit de commutation (620) est activé par le circuit de protection (660) en fonction du premier signal de commande (SW_EMR), le contrôleur (420, 430) génère le premier signal de commande (SW_EMR) pour maintenir le premier circuit de commutation (620) en état d'activation, et le contrôleur (420, 430) génère le second signal de commande (SW_SSR) pour éteindre le second circuit de commutation (640) ainsi que le circuit de protection (660).

7. Une prise sans étincelle (1000", 2000"), configurée pour être en contact avec trois broches (101) d'une fiche (100) devant être insérée dans la prise, comprenant:
une prise (200, 200"), dans laquelle une première fente (210), une seconde fente (220), et une troisième fente (240) dans une direction différente de la première fente (210) et de la seconde fente (220) sont configurées dans la prise (200, 200"), chacune des fentes (210, 220, 240) ayant deux parois de fentes, dans laquelle un trou traversant (230) est configuré sur chacune des parois de l'une quelconque de la première fente (210), de la seconde fente (220) et de la troisième fente (240);
un module de détection (300), comprenant:
un module de guidage de lumière (500), comprenant un premier pilier de guidage de lumière (510), un second pilier de guidage de lumière (520), un troisième pilier de guidage de lumière (530) et un quatrième pilier de guidage de lumière (540) ;
un émetteur (310), configuré pour émettre de la lumière infrarouge (700) dans le premier pilier de guidage de lumière ;
un premier récepteur (320), configuré pour recevoir la lumière infrarouge (700) via le premier pilier de guidage de lumière (510), le trou traversant (230) de la première fente (210) et le second pilier de guidage de lumière (520), de manière à générer un premier résultat de détection en conséquence;
un deuxième récepteur (330), configuré pour recevoir la lumière infrarouge (700) via le premier pilier de guidage de lumière (510) et le trou traversant (230) de la seconde fente (220) et le troisième pilier de guidage de lumière (530), de manière à générer un second résultat de détection en conséquence; et
un troisième récepteur (340), configuré pour recevoir la lumière infrarouge (700) via le premier pilier de guidage de lumière (510), le trou traversant (230) de la troisième fente (240), et le quatrième pilier de guidage de lumière (540), de manière à générer un troisième résultat de détection en conséquence;
un contrôleur (440, 450), couplé au module de détection (300) pour recevoir le premier résultat de détection, le deuxième résultat de détection et le troisième résultat de détection, et connecté à un système d'alimentation électrique urbain (800); et
un module de commutation (600), couplé entre la prise (200, 200") et le contrôleur (440, 450) pour recevoir du contrôleur (440, 450) une alimentation électrique en courant alternatif (CA) fournie par le système d'alimentation électrique urbain (800), et commandé par le contrôleur (440, 450) pour transmettre l'alimentation électrique AC (VAC) vers la prise (200, 200"),
dans lequel lorsque le le contrôleur (440, 450) détermine que ni le premier récepteur (320) ni le deuxième récepteur (330) ni le troisième récepteur (340) ne reçoit la lumière infrarouge (700) en fonction du premier résultat de détection, du second résultat de détection et du troisième résultat de détection, le contrôleur (440, 450) active le module de commutation (600), et dans le cas contraire, le contrôleur (440, 450) désactive le module de commutation (600).

8. La prise sans étincelle (2000") telle que définie dans la revendication 7, dans laquelle la prise (200") comprend en outre une paroi avant (290), la paroi avant (290) ayant une ouverture (295), l'ouverture (295) étant située entre la première fente (210), la seconde fente (220) et la troisième fente (240), dans laquelle la prise sans étincelle (2000") comprend en outre:
une tige de pression (920) disposée au sein d'un espace intérieur de la prise (200"), une extrémité de la tige de pression (920) dépassant la prise (200") via l'ouverture (295) de la paroi avant (290) de manière à former une partie en saillie (925) ; et
un commutateur mécanique (940), dans lequel le commutateur mécanique (940) a une borne de commande (945), la borne de commande (945) du commutateur mécanique (940) faisant face à une autre extrémité de la tige de pression (920), le commutateur mécanique (940) étant commandé par la tige de pression (920) de manière à générer un premier signal (S1) en réponse à une pression sur la tige de pression (920) ;
dans lequel le contrôleur (450) est en outre couplé au commutateur mécanique (940) de manière à recevoir le premier signal (S1), lorsque le contrôleur (450) détermine qu'aucun élément au sein du premier récepteur (320), du second récepteur (330) et du troisième récepteur (340) ne reçoit la lumière infrarouge (700) en fonction du premier résultat de détection, du second résultat de détection, et du troisième résultat de détection et détermine que l'autre extrémité de la tige de pression (920) appuie sur la borne de commande (945) du commutateur mécanique (940) en fonction du premier signal (S1), le contrôleur (450) active le module de commutation (600), et dans le cas contraire, le contrôleur (450) désactive le module de commutation (600).

9. La prise sans étincelle (2000") telle que définie dans la revendication 8, dans laquelle:
lorsque la fiche (100) ne touche pas la partie saillante (925), l'autre extrémité de la tige de pression (920) n'est pas en contact avec la borne de commande (945) du commutateur mécanique (940) ; et
après que les broches (101) de la fiche (100) sont complètement insérées dans la première fente (210), la deuxième fente (220) et la troisième fente (240) de la prise (200"), la fiche (100) appuie sur la partie en saillie (925) pour amener l'autre extrémité de la tige de pression (920) à appuyer sur la borne de commande (945) du commutateur mécanique (940).

10. La prise sans étincelle (1000", 2000") telle que définie dans l'une quelconque des revendications 7-9, dans laquelle le premier pilier de guidage de lumière (510) est disposé entre la première fente (210), le second la fente (220), la troisième fente (240) et l'émetteur (310), et est configuré pour guider la lumière infrarouge (700) émise par l'émetteur (310), dans laquelle une une entrée (514_1) du premier pilier de guidage de lumière (510) fait face à l'émetteur (310) pour recevoir la lumière infrarouge (700) émise par l'émetteur (310), et trois sorties (511_1, 512_1, 513_1) du premier pilier de guidage de lumière (510) font face au trou traversant (230) de la première fente (210), au trou traversant (230) de la deuxième fente (220) et au trou traversant (230) de la troisième fente (240) respectivement;
un deuxième pilier de guidage de lumière (520), disposé entre la première fente (210) et le premier récepteur (320), dans lequel une entrée (520_1) du second pilier de guidage de lumière (520) fait face au trou traversant (230) de la première fente (210), et une sortie (520_2) du second pilier de guidage de lumière (520) fait face au premier récepteur (320);
le troisième pilier de guidage de lumière (530) est disposé entre la seconde fente (220) et le second récepteur (330), dans lequel une entrée (530_1) du troisième pilier de guidage de lumière (530) faisant face au trou traversant (230) de la seconde fente (220), et une sortie (530_2) du troisième pilier de guidage de lumière (530) fait face au second récepteur (330); et
le quatrième pilier de guidage de lumière (540) est disposé entre la troisième fente (240) et le troisième récepteur (340), dans lequel une entrée (540_1) du quatrième pilier de guidage de lumière (540) fait face au trou traversant (230) de la troisième fente (240), et une sortie (540_2) du quatrième pilier de guidage de lumière (540) fait face au troisième récepteur (340).

11. La prise sans étincelle (1000", 2000") telle que définie dans la revendication 10, dans laquelle:
le premier pilier de guidage de lumière (510) comprend une première broche (511), une seconde broche (512), une troisième broche (513) et une quatrième broche (514) connectées l'une à l'autre, et la première broche (511), la seconde broche (512), la troisième broche (513) et la quatrième broche (514) forment une structure tridimensionnelle en forme de T double,
dans laquelle la première broche (511), la seconde broche (512) et la troisième broche (513) sont connectées l'une à l'autre pour former une structure en forme de T, dans laquelle la première broche (511), la seconde broche (512), et la quatrième broche (514) sont connectées l'une à l'autre pour former une autre structure en forme de T, et dans laquelle la troisième broche (513) et la quatrième broche (514) sont connectées l'une à l'autre pour former une structure en L inversé, et
dans laquelle l'entrée (514_1) du premier pilier de guidage de lumière (510) est disposée sur la quatrième broche (514), et les trois sorties (511_1, 512_1, 513_1) du premier pilier de guidage de lumière (510) sont respectivement disposées à la première broche (511), la deuxième broche (512) et la troisième broche (513).

12. La prise sans étincelle (1000", 2000") telle que définie dans la revendication 10 ou 11, dans laquelle:
lorsque les trois broches (101) de la fiche (100) ne sont pas insérées ou pas complètement insérées dans la première fente (210), la seconde fente (220), et la troisième fente (240) de la prise (200, 200"), la lumière infrarouge (700) émise par l'émetteur (310) est transmise de manière séquentielle au premier récepteur (320) par l'intermédiaire du premier pilier de guidage de lumière (510), le trou traversant (230) de la première fente (210), et le second pilier de guidage de lumière (520),
la lumière infrarouge (700) émise par l'émetteur (310) est transmise de manière séquentielle au second récepteur (330)) via le premier pilier de guidage de lumière (510), le trou traversant (230) de la seconde fente (220), et le troisième pilier de guidage de lumière (530), et la lumière infrarouge (700) émise par l'émetteur (310) est transmis de manière séquentielle au troisième récepteur (340) via le premier pilier de guidage de lumière (510), le trou traversant (230) de la troisième fente (240), et le quatrième pilier de guidage de lumière (540), et
après le trois broches (101) de la fiche (100) sont complètement insérées dans la première fente (210), la deuxième fente (220) et la troisième fente (240) de la prise (200, 200"), les trois broches (101) de la fiche (100) recouvrent le trou traversant (230) de la première fente (210), le trou traversant (230) de la seconde fente (220) et le trou traversant (230) de la troisième fente (240) pour bloquer la lumière infrarouge (700) guidée par le premier pilier de guidage de lumière (510).

13. La prise sans étincelle (1000", 2000") telle que définie dans l'une quelconque des revendications 7-12, dans laquelle le module de commutation (600) comprend:
un premier circuit de commutation (620), couplé entre le contrôleur (440, 450) et la prise (200, 200") pour recevoir le courant alternatif AC (VAC) du contrôleur (440, 450), et commandée par un premier signal de commande (SW_EMR) pour transmettre le courant alternatif AC (VAC) à la prise (200, 200") ;
un deuxième circuit de commutation (640), couplé au contrôleur (440, 450) pour recevoir l'alimentation en courant alternatif AC (VAC); et
un circuit de protection (660), couplé entre le deuxième circuit de commutation (640) et la prise (200, 200"),
dans lequel le second circuit de commutation (640) est commandé par un second signal de commande (SW_SSR) et transmet à la prise (200, 200") le courant alternative AC (VAC) via le circuit de protection (660),
dans lequel le circuit de protection (660) est commandé par le second signal de commande (SW_SSR) pour détecter une puissance de charge de la prise (200, 200") lorsque le deuxième circuit de commutation (640) est activé, lorsqu'une variation instantanée de la puissance de charge est supérieure à un seuil de surcharge, le circuit de protection (660) génère le premier signal de commande (SW_EMR) pour activer le premier circuit de commutation (620) de manière à protéger le second circuit de commutation (640) qui est activé,
dans lequel le contrôleur (440, 450) reçoit le premier signal de commande (SW_EMR) et lorsque le contrôleur (440, 450) détermine que le premier circuit de commutation (620) est activé par le circuit de protection (660) en fonction du premier signal de commande (SW_EMR), le contrôleur (440, 450) génère le premier signal de commande (SW_EMR) pour maintenir le premier circuit de commutation (620) dans un état activé, et le contrôleur (440, 450) génère le second signal de commande (SW_SSR) pour désactiver le second circuit de commutation (640) et le circuit de protection (660).
